(19) Europäisches Patentamt

European Patent Office

Office européen des brevets

(11) **EP 1 005 748 B1**

(12) **FASCICULE DE BREVET EUROPEEN**

(45) Date de publication et mention
de la délivrance du brevet:
**24.03.2004 Bulletin 2004/13**

(21) Numéro de dépôt: **98935065.7**

(22) Date de dépôt: **30.06.1998**

(51) Int Cl.$^7$: **H04L 27/26**

(86) Numéro de dépôt international:
**PCT/FR1998/001398**

(87) Numéro de publication internationale:
**WO 1999/001967 (14.01.1999 Gazette 1999/02)**

(54) **MODULATION MULTIPORTEUSE EMPLOYANT DES FONCTIONS PROTOTYPES PONDEREES**

MEHRTRÄGERMODULATION UNTER VERWENDUNG GEWICHTETER
PROTOTYPFUNCTIONEN

MULTICARRIER MODULATION USING WEIGHTED PROTOTYPE FUNCTIONS

(84) Etats contractants désignés:
**DE GB IT SE**

(30) Priorité: **01.07.1997 FR 9708547**

(43) Date de publication de la demande:
**07.06.2000 Bulletin 2000/23**

(73) Titulaires:
• **FRANCE TELECOM exploitant public
75015 Paris (FR)**
• **TELEDIFFUSION DE FRANCE
75732 Paris Cédex 15 (FR)**

(72) Inventeurs:
• **COMBELLES, Pierre
F-35000 Rennes (FR)**
• **LACROIX, Dominique
F-35000 Rennes (FR)**
• **JALALI, Ali
F-35700 Rennes (FR)**

(74) Mandataire: **Vidon, Patrice et al
Cabinet Vidon
16 B, rue Jouanet - B.P. 90333
Technopole Atalante
35703 Rennes Cedex 7 (FR)**

(56) Documents cités:
**EP-A- 0 668 679**

• **DANESFAHANI ET AL.: "Multirate extensions to COSSAP and lessons learnt from developing advanced models" IEE COLLOQUIUM ON COMMUNICATIONS SIMULATION AND MODELLING TECHNIQUES, no. 139, 28 septembre 1993, pages 7/1-7/6, XP000577280**
• **CROCHIERE & RABINER: "Multirate Digital Signal Processing" 1983 , PRENTICE-HALL , ENGLEWOOD CLIFFS, US XP002059943 voir page 313, alinéa 7.2.5 - page 325, alinéa 7.2.7**
• **FLIEGE: "Orthogonal multiple carrier data transmission" EUROPEAN TRANSACTIONS ON TELECOMMUNICATIONS AND RELATED TECHNOLOGIES., vol. 3, no. 3, mai 1992, pages 255-264, XP000304924 MILAN, IT**

**Description**

**1 - Domaine de l'invention**

1-1 Généralités

Le domaine de l'invention est celui de la transmission ou de la diffusion de données numériques, ou de données analogiques et échantillonnées, destinées à être reçues notamment par des mobiles. Plus précisément, l'invention concerne la mise en oeuvre de signaux multiporteuses de type OFDM/OQAM. En d'autres termes, l'invention s'applique aux signaux de densité 2, voire plus.

On sait que la modulation multiporteuse présente de nombreux intérêts, notamment lorsqu'elle est associée à un codage correcteur d'erreur et à un entrelacement. On a ainsi retenu la technique COFDM (Coded Orthogonal Frequency Division Multiplexing) pour la norme de diffusion audionumérique européenne (DAB) et pour la norme de diffusion de télévision numérique de terre (DVB-T).

La technique COFDM présente un système d'égalisation particulièrement simple, à savoir l'utilisation d'un intervalle de garde, encore appelé préfixe cyclique. Ce dernier permet d'assurer un bon comportement face aux échos, mais au prix d'une perte relativement importante en efficacité spectrale.

Ce problème est notamment discuté dans la demande de brevet française FR-95 05455 (dans laquelle la modulation COFDM est appelée OFDM/QAM). Pour pallier ce problème, ce document de brevet présente une nouvelle technique d'implémentation de modulations multiporteuses de type OFDM/OQAM.

On notera que les différents types de modulation discutés par la suite sont désignés de façon légèrement différente dans ce document antérieur et dans la présente demande de brevet. La table ci-dessous établit la correspondance :

| FR95 05455 : | Document présent : |
|---|---|
| OFDM/QAM | OFDM/QAM/OFDM |
| OFDM/OQAM | OFDM/OQAM/NYQUIST |
| OFDM/OMSK | OFDM/OQAM/MSK |
| OFDM/IOTA | OFDM/OQAM/IOTA |

Le terme « OQAM » fait référence à la définition en langue anglaise « Offset Quadratic Amplitude Modulation ». Ceci exprime le fait que pour de telles modulations, un offset temporel existe entre l'émission de la partie en phase et celle de la partie en quadrature d'un symbole QAM.

1-2 Applications

L'invention trouve des applications dans de très nombreux domaines, notamment lorsque une haute efficacité spectrale est souhaitée et que le canal est fortement non-stationnaire.

Une première catégorie d'applications concerne la radiodiffusion numérique terrestre, qu'il s'agisse d'image, de son et/ou de données. En particulier, l'invention peut s'appliquer à la diffusion synchrone, qui génère intrisèquement des trajets multiples de longue durée. Elle s'applique également avantageusement à la diffusion vers des mobiles.

Une autre catégorie d'applications concerne les radiocommunications numériques. L'invention peut trouver notamment des applications dans des systèmes de communication numérique vers des mobiles à haut débit.

**2 - Rappels**

2-1 Canal de transmission

En environnement radiomobile, l'onde émise subit des réflexions multiples, et le récepteur reçoit donc une somme de versions retardées du signal émis. Chacune de ces versions est atténuée et déphasée de façon aléatoire. Le récepteur étant supposé en mouvement, l'effet Doppler agit également sur chaque trajet.

La conjugaison de ces effets se traduit par un canal non stationnaire présentant des évanouissements profonds à certaines fréquences (canal sélectif en fréquence). Pour les applications qui retiennent notre attention, la bande de transmission est supérieure à la bande de cohérence du canal (bande pour laquelle la réponse fréquentielle du canal peut être considérée comme constante, sur une durée donnée), et il apparaît donc des évanouissements dans la bande, c'est à dire qu'à un instant donné, certaines fréquences sont fortement atténuées.

2-2 Description d'une modulation multiporteuse

Une modulation multiporteuse est avant tout une modulation numérique, c'est-à-dire un procédé de génération d'un signal électromagnétique à partir de l'information numérique à transmettre. L'originalité, et l'intérêt, d'une telle modulation est de découper la bande limitée allouée au signal en sous-bandes. Sur ces sous-bandes, choisies de largeur inférieure à la bande de cohérence du canal, le canal peut être considéré comme constant pendant la durée de transmission d'un symbole, choisie inférieure au temps de cohérence du canal.

L'information numérique à transmettre pendant cette durée est alors répartie sur chacune de ces sous-bandes. Cela présente notamment deux intérêts :

- diminuer la rapidité de modulation (c'est-à-dire augmenter la durée symbole), sans modifier le débit transmis,
- modéliser simplement l'action du canal sur chacune des sous-bandes : multiplieur complexe.

On notera que, en réception, un système peu complexe de correction des données reçues (division complexe par le canal estimé) permet de récupérer l'information émise sur chacune des porteuses de façon satisfaisante, sauf pour les porteuses ayant subi un évanouissement profond. Dans ce cas, si aucune mesure de protection de l'information n'est prise, les données véhiculées par ces porteuses seront perdues. Un système multiporteuse prévoit donc que la génération du signal électrique soit précédée de traitements numériques des données (codage correcteur d'erreurs et entrelacement).

Le texte du brevet n° FR95/05455 décrit en détail les deux types de modulation multiporteuse existants. On rappelle ici succinctement leurs caractéristiques.

2-2-2 Notations

Espacement entre deux porteuses adjacentes du multiplex de porteuses : $\nu_0$. Espacement temporel entre deux symboles multiporteuses émis (temps symbole): $\tau_0$.

2-2-3 La fonction prototype

Le filtre de mise en forme de chacune des porteuses du multiplex est le même, il correspond à la fonction prototype caractérisant la modulation multiporteuse.

Soit $g(t)$ cette fonction prototype, le signal émis, à chaque instant $n\tau_0$, sur la $m^{\text{ème}}$ sous-bande de fréquence centrale $v_m$, est $a_{m,n}e^{i\varphi m,n}e^{2i\pi v_m t} g(t - nt_0)$.

En bande basse, l'expression du signal émis, centré autour de la fréquence $M\nu_0$, est donc :

$$s(t) = \sum_{n} \sum_{m=0}^{2M-1} a_{m,n}e^{i\varphi_{m,n}} e^{2i\pi m\nu_0 t} g(t - n\tau_0) \qquad (1)$$

Les fonctions $e^{i\varphi_{m,n}} e^{2i\pi m\nu_0 t} g(t - n\tau_0)$ sont appelées les translatées "temps-fréquence" de $g(t)$. Pour retrouver l'information transmise par chacune des sous-porteuses, il faut choisir $g(t)$ de sorte que ses translatées "temps-fréquence" soient séparables. Pour être sûr de cela, on impose que ces translatées soient orthogonales, au sens d'un produit scalaire défini sur l'ensemble des fonctions d'énergie finie (qui est un espace de Hilbert au sens mathématique). Cet espace admet deux produits scalaires possibles, qui sont :

- le PS complexe

$$\langle x | y \rangle = \int_{R} x(t) y^{*}(t) dt$$

- le PS réel

$$\langle x|y \rangle = \Re e \left( \int_{R} x(t)y^{\bullet}(t)dt \right)$$

On définit ainsi deux types de modulation multiporteuse :

- type complexe, ou encore OFDM/QAM : la fonction *g(t)* choisie garantit une orthogonalité de ses translatées au sens complexe (Exemple : OFDM, encore nommé OFDM/QAM/OFDM). Dans ce cas, $\varphi_{m,n}$ = *0* et les données $a_{m,n}$ sont complexes.
- de type réel, ou encore OFDM/OQAM : la fonction *g(t)* choisie garantit une orthogonalité de ses translatées au sens réel (Exemples : OFDM/OQAM/NYQUIST, OFDM/OQAM/MSK, OFDM/OQAM/IOTA). Dans ce cas, $\varphi_{m,n}$ = $(\pi/2)*(m+n)$ et les données $a_{m,n}$ sont réelles.

2-2-4 Densité du réseau "temps-fréquence"

Ces modulations étant destinées à transmettre de hauts débits, elles seront associées à des efficacités spectrales assez grandes, de l'ordre de 4 bits/s/Hz (Télévision Numérique). Le "mapping" des bits issus du codeur correcteur d'erreur sera ainsi de type QAM.

Pour une modulation OFDM/QAM, les parties réelle et imaginaire d'un complexe issu de la constellation QAM sont transmises simultanément, tous les temps symbole $T_1$.

Dans le cas d'une modulation de type OFDM/OQAM, elles sont transmises avec un décalage temporel (Offset QAM) d'un demi temps symbole ($T_1/2$). Pour une même bande de transmission et un même nombre de sous-porteuses, il faudra donc, pour transmettre un même débit, que le rythme d'émission de symboles multiporteuses de type OFDM/OQAM soit deux fois plus rapide que celui de symboles multiporteuses de type OFDM/QAM.

Ces deux modes de transmission de l'information sont caractérisés par la densité du réseau temps-fréquence d = $1/(\nu_0 \tau_0)$. Les modulations multiporteuses de type OFDM/OQAM correspondent à une densité d = 2, celles de type OFDM/QAM correspondent à une densité d = 1.

On peut donc noter qu'une modulation multiporteuse est caractérisée par:

- la densité du réseau "temps-fréguence" sur lequel elle est définie,
- la fonction prototype.

La mise en oeuvre d'une modulation OFDM/OQAM de densité 2, et de la démodulation correspondante, demande une puissance de calcul importante, et une grande capacité de mémorisation. Cela sous-entend donc que les appareils correspondants seront relativement complexes et coûteux.

Le document "Multirate extensions to COSSAP and lessons learnt from developing advanced models" (Danesfahani et al. IEEE Colloqium on communications simulation and modelling techniques, n° 139, 28/09/93, pp. 713-716) montre, pour la démodulation de signaux d'un autre type (SUPC/FOMA), une structure dite "weighted overlap-add analyser". Cependant, cette technique est uniquement destinée à la démodulation d'un type particulier de signal, non orthogonal, et s'avère non recommandé, car exigeant un nombre élevé de calculs, dès qu'un nombre important de canaux est prévu.

**3 - Objectlfs de l'invention**

L'invention a notamment pour objectif de pallier, ou réduire, ces inconvénients.

Plus précisément, un objectif de l'invention est de fournir des techniques de modulation et de démodulation de signaux multiporteuses qui soient simples et peu coûteuses à mettre en oeuvre, par rapport aux approches directes.

En d'autres termes, l'invention a pour objectif de fournir de telles techniques de modulation et de démodulation, qui limitent le nombre d'opérations à effectuer et la capacité de mémorisation nécessaire.

**4 - Description de l'invention**

Ces objectifs, ainsi que d'autres qui apparaîtront par la suite, sont atteints selon l'invention à l'aide d'un procédé de modulation d'un signal multiporteuse de densité $1/(\nu_0.\tau_0)=2$, formé de symboles successifs, comprenant chacun M échantillons à émettre, et constitués d'un jeu de 2M fréquences porteuses orthogonales au sens réel, l'écart entre deux fréquences porteuses voisines valant $\nu_0$ et l'écart entre les instants d'émission de deux symboles consécutifs, ou temps symbole, valant $\tau_0$,

chacune desdites fréquences porteuses étant modulée selon une même fonction prototype de modulation g(t) présentant une longueur de troncature de $2L\tau_0$,
procédé comprenant, à chaque temps symbole, les étapes suivantes :

- obtention d'un jeu de 2M coefficients complexes représentatifs de données à émettre ;
- calcul de 2LM combinaisons linéaires à partir desdits 2M coefficients complexes obtenus, les coefficients de pondération utilisés dans cesdites combinaisons étant représentatifs de ladite fonction prototype g(t), de façon à obtenir 2LM coefficients ;
- sommation desdits 2LM coefficients pondérés dans des emplacements mémoire prédéterminés respectifs d'une mémoire comprenant 2LM emplacements mémoire représentant 2L groupes de M sommes partielles distinctes,

  de façon à former progressivement, dans lesdits emplacements mémoire, sur une durée de $2L\tau_0$, M échantillons à émettre ;

- émission desdits échantillons à émettre.

Ainsi, selon l'invention, les données à traiter sont stockées après la pondération, et non avant. Il est ainsi possible de réduire la capacité de mémoire nécessaire, ainsi que le nombre d'opérations effectuées. Les échantillons à émettre sont construits progressivement, dans chaque champ de mémorisation.

Selon un mode de réalisation avantageux de l'invention, un échantillon à émettre à l'instant $j\tau_0 + k\tau_0/M$, noté $s_{k+jM}$ s'écrit :

$$s_{k+jM} = \sum_{q=0}^{2L-1} \left[ \alpha_{k,q} C_{k,j-q} + \beta_{k,q} C_{k+M,j-q} \right]$$

où :

$C_{o,j}$ à $C_{2M-1,j}$ sont les 2M coefficients complexes générés entre les instants $j\tau_0$ et $(j+1)\tau_0$ ;
$\alpha_{k,q}$ et $\beta_{k,q}$ sont lesdits coefficients de pondération.

Dans le cas d'une modulation OFDM/OQAM, on aura généralement :

- $\alpha_{k,q} = 0$ pour q impair ;
- $\beta_{k,q} = 0$ pour q pair.

Le nombre d'opérations effectuées est donc encore réduit de moitié.
Dans un mode de réalisation préférentiel de l'invention, le procédé comprend, pour la génération d'un symbole d'indice j formé de M échantillons, les étapes suivantes :

- obtention de 2M entrées réelles $a_{m,n}$ représentatives d'un signal source ;
- pré-modulation de chacune desdites entrées réelles, produisant 2M coefficients complexes ;
- transformation de Fourier inverse desdits 2M coefficients complexes, produisant 2M coefficients transformés complexes $C_{0,j}$ à $C_{2M-1,j}$ ;
- pour chacun des M couples $(C_{k,j}, C_{(k+M),j})$ dedits coefficients transformés, calcul de 2L couples pondérés, les coefficients de pondération étant représentatives de ladite fonction prototype;
- addition du résultat de chacune desdites 2LM valeurs pondérées au contenu de 2LM zones mémoire distinctes, de façon à construire progressivement les échantillons à émettre constituants les symboles j, (j+1), (j+2),... (j+2L-1);
- émission de M échantillons correspondant aux M plus anciens contenus desdites zones mémoire puis mise à zéro du contenu de cesdites M zones mémoire.

En général, lesdites étapes seront mises en oeuvre au rythme $\tau_o/M$ des échantillons.
Le contrôle des moyens de mémorisation est très simple. Ainsi, ladite étape d'émission peut être suivie d'une étape de mise à jour desdits emplacements mémoire, comprenant :

- un décalage physique du contenu de chacun desdits emplacements mémoire, si ces derniers sont des éléments d'un registre à décalage ; ou
- une mise à jour des adresses d'écriture et de lecture desdits emplacements mémoire, si ces derniers sont des éléments d'une mémoire RAM.

Selon une caractéristique avantageuse de l'invention, lesdits coefficients représentatifs de données à émettre sont obtenus par la mise en oeuvre d'une transformation mathématique comprenant les étapes suivantes:

- application d'une transformation de Fourier inverse réelle ;
- permutation circulaire du résultat de cette transformée inverse de M/2 coefficients vers la gauche;
- multiplication par $i^n$ de chacun desdits coefficients.

Ainsi, il est possible d'obtenir des coefficients transformés complexes, à partir d'une FFT à entrées réelles. A nouveau, cela permet de limiter le nombre d'opérations effectuées.

On peut encore simplifier les calculs, en modifiant légèrement l'équation du signal centré autour de la fréquence $M\nu_0$, de façon qu'il s'écrive :

$$s(t) = \sum_n \sum_{m=0}^{2M-1} a_{m,n} (-1)^{m(n+L)} i^{m+n} e^{2i\pi m\nu_0 t} g(t - n\tau_0)$$

L'invention concerne également les dispositifs de modulation mettant en oeuvre un tel procédé de modulation.
Selon un mode de réalisation particulier, ce dispositif comprend notamment :

- des moyens de transformation mathématique délivrant lesdits coefficients représentatifs de données à émettre au rythme $\tau_0/2M$ et dans l'ordre suivant $(C_{0,j}, C_{M+1,j}),...(C_{M-1,j}, C_{2M-1,j})$ ;
- 2LM-M emplacements mémoire de type RAM à écriture et lecture simultanées ;
- N multiplieurs complexes fonctionnant au rythme $N\tau_0/2LM$, N valant 1, 2, 4,...ou 2L.

De cette façon, la place mémoire est encore réduite.
L'invention concerne encore un procédé de démodulation d'un signal reçu, correspondant à un signal émis multiporteuse de densité $1/(\nu_0.\tau_0) = 2$. Selon ce procédé, on reconstruit une estimation des 2M données réelles émises à un temps symbole donné, à l'aide des étapes suivantes:

- échantillonnage dudit signal reçu à la fréquence d'échantillonnage $\tau_0/M$, délivrant M échantillons complexes reçus ;
- mémorisation de chacun desdits M échantillons complexes reçus dans un emplacement prédéterminé d'une mémoire d'entrée comprenant 2ML emplacements complexes, dans laquelle ont été préalablement mémorisés (2L-1)M échantillons reçus pendant les 2L-1 temps symbole précédents;
- multiplication des 2ML valeurs contenues dans ladite mémoire d'entrée par des coefficients représentatifs de ladite fonction prototype ;
- repliement temporel, par sommation de 2M séries de L résultats de multiplication, de façon à obtenir 2M valeurs complexes ;
- traitement desdites 2M valeurs complexes pour former lesdites estimations des 2M données réelles émises.

Avantageusement, les 2M valeurs complexes issues de l'étape de repliement temporel entre les instants $(j+2L-1)\tau_0$ et $(j+2L)\tau_0$ s'écrivent :

$$R_{k',j} = \sum_{q'=0}^{2L-1} \alpha'_{k,q} \, r_{k'+(j+q')M}$$

$$R_{k'+M,j} = \sum_{q'=0}^{2L-1} \beta'_{k,q} \, r_{k'+(j+q')M}$$

où :

$r_{k'+(j+q')M}$ représente l'échantillon reçu à l'instant $k'\tau_0+(j+q')\tau_0/M$;
$\alpha'_{k,q}$ et $\beta'_{k,q}$ sont lesdits coefficients de pondération.

Le plus souvent, les calculs seront simplifiés, du fait que :

- $\alpha'_{k,q'} = 0$ pour q' impair ;
- $\beta'_{k,q'} = 0$ pour q' pair.

Selon un mode de réalisation préférentiel, ladite étape de traitement comprend les étapes suivantes :

- application d'une transformation mathématique inverse de celle effectuée lors de la modulation sur lesdites 2M valeurs complexes, délivrant 2M valeurs transformées ;
- correction de distorsions de phase et/ou d'amplitude dues au canal de transmission ;
- extraction de la partie réelle desdites valeurs complexes transformées.

En général, lesdites étapes sont mises en oeuvre au rythme $\tau_0/M$ des échantillons.
L'invention concerne également les dispositifs de démodulation mettant en oeuvre ce procédé. Ces dispositifs comprennent :

- des moyens d'échantillonnage dudit signal reçu ;
- des moyens de mémorisation temporaire des échantillons complexes échantillonnés, comprenant 2ML emplacements complexes ;
- des moyens de multiplication desdits échantillons mémorisés par des coefficients de pondération représentatifs de ladite fonction prototype ;
- des moyens de repliement temporel, assurant la sommation de L résultats de pondération, de façon à obtenir 2M valeurs complexes ;
- des moyens de traitement desdites valeurs complexes, délivrant une estimation de 2M données réelles émises à chaque temps symbole.

Il est possible de réduire encore la place mémoire nécessaire dans ce dispositif, à l'aide de :

- moyens de mémorisation comprenant 2ML-M emplacements mémoire complexes de type RAM à écriture et lecture simultanée ;
- N multiplieurs complexes fonctionnant au rythme $N\tau_0/2LM$, où N vaut 1, 2, 4 ... ou 2L ;
- moyens de transformation mathématique fonctionnant au rythme $\tau_0/2M$, dont les entrées, $R_{o,j}$ à $R_{2M-1,j}$ sont lues dans l'ordre $(R_{0,j}, R_{M,j}), (R_{1,j}, R_{M+1,j}),... (R_{M-1,j}, R_{2M-1,j})$.

Enfin, l'invention concerne plus généralement un procédé de filtrage délivrant des séries de M valeurs complexes de sortie à intervalles réguliers, à partir de 2L séries de 2M valeurs complexes d'entrée,
lesdites M valeurs complexes correspondant à une somme pondérée de 2L desdites valeurs complexes d'entrée à traiter,
comprenant les étapes suivantes, pour chaque série de valeurs complexes d'entrée :

- calcul de 2LM combinaisons linéaires à partir desdits 2M coefficients complexes obtenus, les coefficients de pondération étant issus de 2L filtres complexes ou réels de taille M, de façon à obtenir 2LM coefficients;
- sommation de chacune des valeurs pondérées dans un emplacement mémoire prédéterminé, parmi un ensemble de 2ML emplacements mémoire contenant chacun une somme partielle, de façon à former progressivement lesdites valeurs de sortie, dans lesdits emplacements mémoire, sur une durée correspondant à la réception 2L séries de valeurs complexes d'entrée.

Le terme « filtrage » doit bien sûr être pris ici dans son sens général de traitement, ou calcul, effectué sur des données. Ce traitement, qui comprend le calcul d'une somme pondérée, est réalisé progressivement.

**5 - Description d'un mode de réalisation préférentiel**

5-1 Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :

- la figure 1 illustre de façon générale et simplifiée le procédé de modulation de l'invention (étape j), permettant de générer *M* échantillons ;
- la figure 2 illustre la construction progressive des *M* échantillons, dans le cas où *L*=4; pour la forme d'onde Iota ;
- la figure 3 illustre de façon plus détaillée le fonctionnement du procédé de modulation de l'invention, pour les instants j-1 à j+2.
- la figure 4 précise l'amorçage de la procédure de modulation de la figure 3, dans le cas où L = 4.
- la figure 5 est un schéma de principe d'un circuit de IFFT complexe connu en soi;
- les figures 6A à 6C illustrent des architectures optimisées, mettant en oeuvre des FIFOs, et utilisant respectivement un seul multiplieur (figure 6A), L multiplieurs (figure 6B) ou 2L multiplieurs (figure 6C) ; ce procédé, dans le cas où une structure FIFO est choisie.
- la figure 7 présente un mode de réalisation optimisé de la FFT inverse, utilisant une FFT à entrées réelles ;
- la figure 8 illustre le fonctionnement du procédé de démodulation de l'invention, dans le cas *L*=4 ;
- la figure 9 présente le cas général de la démodulation, qui se déduit directement de la figure 8 ;
- la figure 10 illustre une architecture de démodulateur correspondant ;
- les figures 11 et 12 présentent deux mises en oeuvre du filtrage de réception, dans le cas d'une structure FIFO, utilisant respectivement L et 2L multiplieurs.

5-2 Notations

- . Espacement interporteuses : $\nu_0$.
- . Durée intersymboles : $\tau_0$.
- . Densité du réseau : $1/(\nu_0\tau_0) = 2$.
- . Bande allouée au signal : $W = 2M\nu_0$.
- . Fréquence d'échantillonnage : $f_e = 1/T_e = M/\tau_0$.
- . Longueur de troncature de la fonction prototype : $2L\tau_0$.

En théorie, la fonction prototype est de support temporel et/ou fréquentiel infini. Cependant, pour implémenter le filtre numérique correspondant, il faut tronquer cette fonction.

C'est le cas en OFDM/OQAM/NYQUIST (support temporel infini) et en OFDM/OQAM/IOTA (supports temporel et fréquentiel infinis). Typiquement, pour la fonction Iota, *L* = 4 au minimum. Pour un échantillonnage à $T_e$ défini ci-dessus, le filtre numérique sera alors de longueur 2*LM* coefficients réels.

. Indices des échantillons :

Pour être cohérent avec les formules données par la suite, on note :

$$x_k = x\left( k\frac{\tau_0}{M} - L\tau_0 \right)$$
$$x_{k+LM} = x\left( k\frac{\tau_0}{M} \right) \qquad (2)$$

la fonction prototype *g(t)*, le signal émis *s*(*t*) ou le signal émis *r*(*t*) peuvent être substitués à *x(t)*.

5-3 Algorithme de modulation

5-3-1 Principe

Le signal bande basse centré autour de la fréquence $Mv_0 = f_e/2$, s'écrit

$$s(t) = \sum_n \sum_{m=0}^{2M-1} \underbrace{a_{m,n} i^{m+n} e^{2i\pi m v_0 t}}_{c_{m,n}} g(t - n\tau_0) \qquad (3)$$

Un échantillon du signal s'écrit donc

$$s(p\frac{\tau_0}{M}) = \sum_n \sum_{m=0}^{2M-1} a_{m,n} i^{m+n} e^{2i\pi \frac{mp}{2M}} g\left((p - nM)\frac{\tau_0}{M}\right) \qquad (4)$$

Avec les notations introduites ci-dessus (Formule (2)), on a, après calcul,

$$s_p = \sum_n \sum_{m=0}^{2M-1} a_{m,n} i^{m+n} e^{2i\pi \frac{mp}{2M}} (-1)^{mL} g_{p-nM} \qquad (5)$$

Etant donnée la décroissance rapide de la fonction prototype, seuls ses échantillons indicés de 0 à $2ML\text{-}1$ sont considérés comme non nuls. Nous devrons donc avoir $0 \le p - nM \le 2ML\text{-}1$. En posant $p = k + jM$ où $0 \le k \le M\text{ -}1$, nous obtenons $j - (2L\text{-}1) \le n \le j$.
L'équation (5) devient

$$s_{k+jM} = \sum_{n=j-(2L-1)}^{j} \sum_{m=0}^{2M-1} a_{m,n} i^{m+n} (-1)^{m(n+L)} e^{2i\pi \frac{m(k+(j-n)M)}{2M}} g_{k+(j-n)M} \qquad (6)$$

Enfin, en posant $q = j\text{-}n$, nous obtenons la formule dont découle l'algorithme de modulation:

$$s_{k+jM} = \sum_{q=0}^{2L-1} \underbrace{\underbrace{\sum_{m=0}^{2M-1} \underbrace{a_{m,(j-q)} i^{m+(j-q)} (-1)^{m(j-q+L)}}_{\text{Pre-modulation}} e^{2i\pi \frac{m(k+qM)}{2M}}}_{\text{FFT Inverse}} \cdot g_{k+qM}}_{\text{Ponderation par la fonction prototype } g(t)} \qquad (7)$$

$$\text{avec} \begin{cases} 0 \le k \le M - 1 \\ j \in \mathbb{Z} \end{cases}$$

En notant $c_{m,j\text{-}q}$ les valeurs d'entrées pré-modulées, soit

$$c_{m,j-q} = a_{m,(j-q)} i^{m+(j-q)} (-1)^{m(j-q+L)}$$

l'équation (7) devient :

$$s_{k+jM} = \sum_{q=0}^{2L-1} \left( \sum_{m=0}^{2M-1} c_{m,j-q} \, e^{2i\pi \frac{m(k+qM)}{2M}} \right) g_{k+qM} \quad (8)$$

Cette dernière formule conduit à un algorithme de modulation en trois étapes principales :

- Pré-modulation des données grâce à une multiplication complexe simple.
- Transformée de Fourier inverse (par l'algorithme IFFT).
- Filtrage par la fonction prototype.

Ici, comme dans la suite de ce document, on entend par filtrage une opération de pondération des résultats de 2L FFT inverses par certaines valeurs de la fonction prototype, suivie d'une opération de sommation de ces coefficients pondérés. Il s'agit en d'autres termes d'une combinaison linéaire.

On présente ci-dessous deux modes de mise en oeuvre possibles. Le second est optimal et fait plus précisément l'objet de l'invention.

Bien qu'en pratique, on travaille au rythme échantillon $\tau_0/M$, nous garderons la structure de bloc de $M$ échantillons pour décrire ces modes de mise en oeuvre avec plus de clarté.

5-3-2 Architecture directe

Au vu de la formule (8), il faut effectuer 2L IFFT de taille 2$M$ complexes pour générer $M$ échantillons (correspondant à la durée d'un symbole multiporteuse $\tau_0$).

Cependant, le résultat d'une IFFT intervient sur le calcul de 2$L$ blocs consécutifs d'échantillons. Pour calculer les $M$ échantillons courants, il ne faut donc calculer que la Transformée de Fourier inverse des 2$M$ dernières données entrées dans le modulateur, les résultats des 2$L$-1 autres IFFT ayant été calculés aux étapes précédentes, et stockés en mémoire.

L'algorithme de modulation comprend donc les étapes principales suivantes :

- Pré-modulation des 2$M$ entrées réelles, délivrant 2$M$ complexes.
- Transformée de Fourier inverse de taille 2$M$ complexes (algorithme IFFT).
- Stockage du résultat en réactualisant un buffer de taille 2$L$*2$M$ complexes (contenant les résultats des 2$L$ FFT inverses impliquées dans le calcul).
- Filtrage de 2$LM$ éléments du buffer de stockage par la fonction prototype.
- Emission des $M$ échantillons complexes ainsi calculés.

La taille mémoire requise est donc :

- une RAM de taille 2$L$*2$M$ complexes (buffer d'entrée).
- une ROM de taille $ML$+1 réels (coefficients de pondération).

(La fonction prototype étant choisie symétrique, sur les 2$ML$ coefficients de pondération, seuls $ML$+1 sont distincts).

Cette première façon de procéder laisse entrevoir un gaspillage de mémoire RAM. La deuxième architecture proposée montre qu'il est possible de réduire de plus que de moitié la taille de mémoire RAM nécessaire. Cette réduction s'accompagne d'une réduction du nombre d'opérations, et donc d'une augmentation de la vitesse de traitement.

5-3-3 Architecture optimisée

Il est possible d'optimiser l'architecture du modulateur, selon l'invention, tant au niveau du filtrage par la fonction prototype que de la FFT inverse. En effet, en analysant la formule (8), on peut vérifier que pour chacune des 2L IFFT impliquées dans le calcul du bloc courant de M échantillons, seuls M points sur 2M sont utilisés.

Il est alors possible de réduire de moitié la mémoire RAM nécessaire en stockant les données servant aux calculs des différents blocs d'échantillons après le filtrage, et non avant. De plus, la structure particulière des données complexes en entrée de la FFT inverse ($a_{m,n}$ $(-1)^{m(n+L)}$ $i^{m+n}$) permet d'utiliser un algorithme de FFT inverse à entrées réelles.

Afin de préciser ce procédé, nous allons développer la formule (8):

$$s_{k+jM} = \sum_{q'=0}^{L-1} \left[ \sum_{m=0}^{2M-1} c_{m,j-2q'} e^{2i\pi \frac{m\,k}{2M}} g_{k+2q'M} + \sum_{m=0}^{2M-1} c_{m,j-(2q'+1)} e^{2i\pi \frac{m(k+M)}{2M}} g_{k+(2q'+1)M} \right]$$

Posons :

$$C_{k,n} = \sum_{m=0}^{2M-1} c_{m,n} e^{2i\pi \frac{m\,k}{2M}} \qquad (9.1)$$

et

$$C_{k+M,n} = \sum_{m=0}^{2M-1} c_{m,n} e^{2i\pi \frac{m(k+M)}{2M}} \qquad (9.2)$$

Nous avons :

$$s_{k+jM} = \sum_{q'=0}^{L-1} \left[ C_{k,j-2q'} g_{k+2q'M} + C_{k+M,j-(2q'+1)} g_{k+(2q'+1)M} \right] \qquad (10)$$

$$\text{avec } 0 \le k \le M-1$$

L'équation (10) traduit la construction de M valeurs complexes à partir de 2ML valeurs complexes. Elle peut s'écrire de façon plus générale :

$$s_{k+jM} = \sum_{q=0}^{2L-1} \left[ \alpha_{k,q} C_{k,j-q} + \beta_{k,q} C_{k+M,j-q} \right] \qquad (11)$$

$$\text{avec } 0 \le k \le M-1$$

Dans le mode de réalisation décrit,

$$\alpha_{k,q} = \begin{cases} 0 & \text{si q est impair} \\ g_{k+qM} & \text{si q est pair} \end{cases} \text{ et } \beta_{k,q} = \begin{cases} g_{k+qM} & \text{si q est impair} \\ 0 & \text{si q est pair} \end{cases}$$

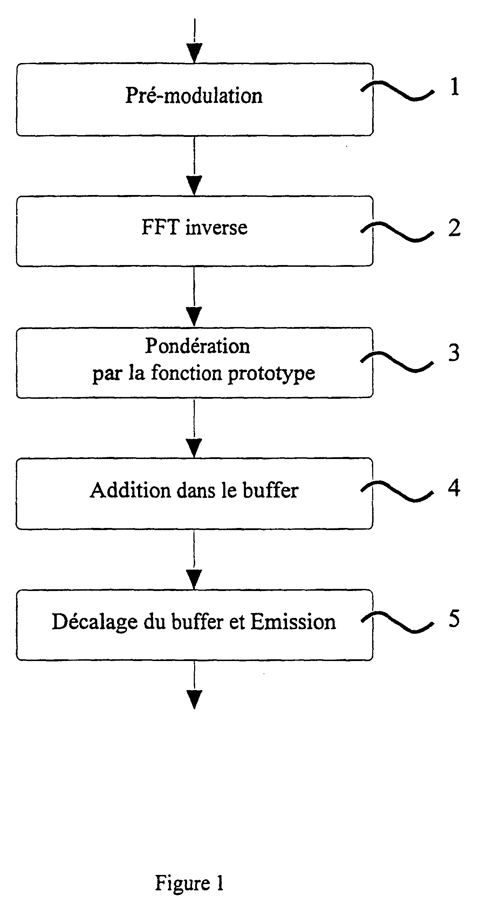

Pour générer $M$ échantillons selon cet algorithme de modulation, on peut donc procéder ainsi que cela est illustré en figure 1 (étape j) :

- Pré-modulation 11 des 2*M* entrées réelles.
- Transformée de Fourier inverse 12 des 2*M* données complexes ainsi obtenues, de façon à générer des $C_{k,j}$ et $C_{k+M,j}$.
- Pondération 13 (correspondant à l'application de la fonction prototype) du résultat de la Transformée de Fourier inverse par la fonction prototype : *L* opérations de pondération parallèles.

Les L vecteurs de pondération, de taille 2*M*, ont pour coefficients :

$$[g_0,.., g_{2M-1}], [g_{2M},.., g_{4M-1}],...,[g_{2LM-2M},.., g_{2LM-1}].$$

- Addition 14 de ces résultats de pondération au buffer de sortie de taille 2*ML* complexes.
- Décalage 15 du buffer de sortie avec émission de *M* échantillons, correspondants aux M plus anciennes valeurs contenues dans le buffer.

Un échantillon du signal à émettre représente une somme de 2*L* résultats de IFFT pondérés. Chaque bloc de *M* cases mémoire consécutives du buffer de sortie contient *M* sommes partielles de 2*L*-$m_{bloc}$ termes chacune, où $m_{bloc}$ varie de 1 à 2*L* ($m_{bloc}$ =2*L* correspond au bloc "tout à zéro", dû à l'opération de décalage du buffer (étape 14) à l'instant (j-1)$\tau_0$). Les 2*ML* éléments issus des *L* opérations de pondération parallèles sont ici ajoutés aux 2*ML* éléments du buffer.

Après cette opération, les *M* sommes partielles du buffer correspondant à $m_{bloc}$ = 1 sont complétées, c'est à dire que les M échantillons courants sont calculés et peuvent donc être émis.

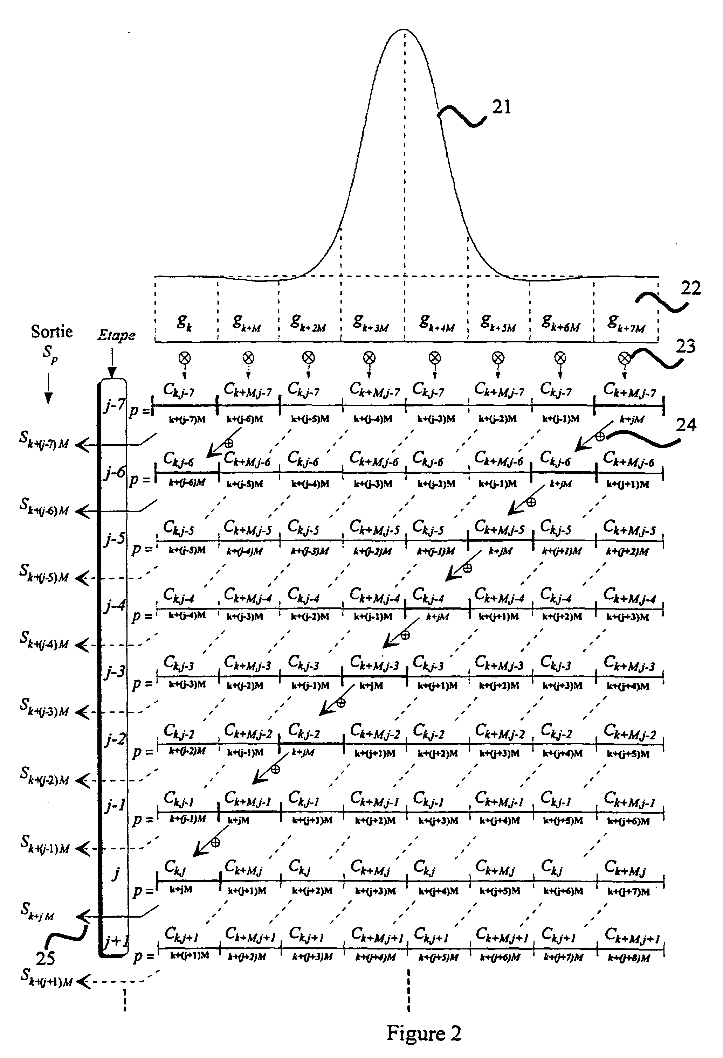

Ce fonctionnement est décrit par la figure 2, dans le cas où *L*=4. Chaque ligne illustre la situation du buffer de construction des données à émettre, à un instant donné. Il faut 2L temps symbole consécutifs pour construire progressivement un échantillon à émettre.

La forme d'onde 2L représentée correspond à la fonction Iota. Elle est représentée par les 2L vecteurs de coefficients 22 [$g_k$] à [$g_{k+7M}$], où l'indice k varie de 0 à M-1.

A chaque instant, les 2*M* coefficients en entrée sont multipliés (23) par les coefficients 22, puis additionnnés (24) chacun à une somme partielle.

Les *M* sommes partielles complétées à l'étape 15 sont émises, le contenu du buffer est décalé de *M* cases mémoire (de sorte à assurer le bon ordre du calcul des *M* prochains échantillons) et *M* zéros sont insérés dans les *M* cases mémoire vacantes.

La diagonale 25 illustre ainsi le calcul de $S_{k+jM}$.

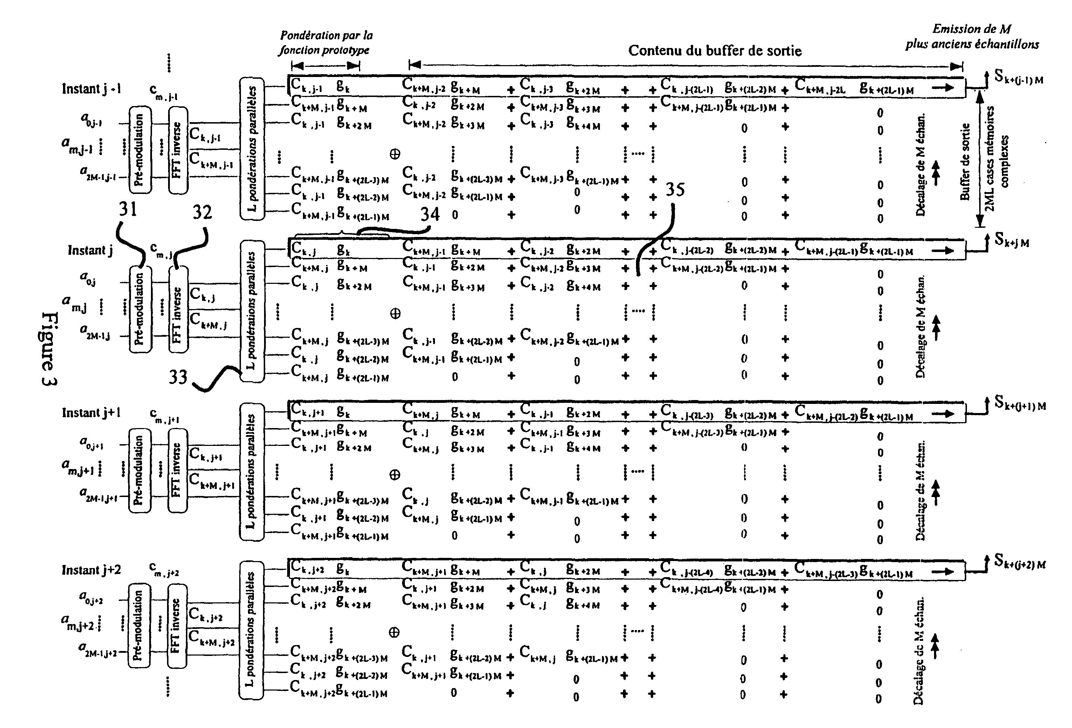

La figure 3 illustre de façon plus détaillée le fonctionnement de cet algorithme, pour les instants j-1 à j+2. Si l'on considère l'instant j, les coefficients $a_{m,j}$ à transmettre alimentent le module 31 de pré-modulation, qui fournit à la FFT inverse 32 les coefficients $c_{m,j}$. La FFT inverse délivre les $C_{k,j}$ et $C_{k+M,j}$ (l'indice k variant de 0 à M-1) qui sont soumis à la pondération 33 (L opérations de pondération en parallèle) pour délivrer les résultats 34, qui sont sommés dans un buffer de sortie 35.

On a indiqué, sur la figure 3, le contenu exact de ces buffers de sortie.

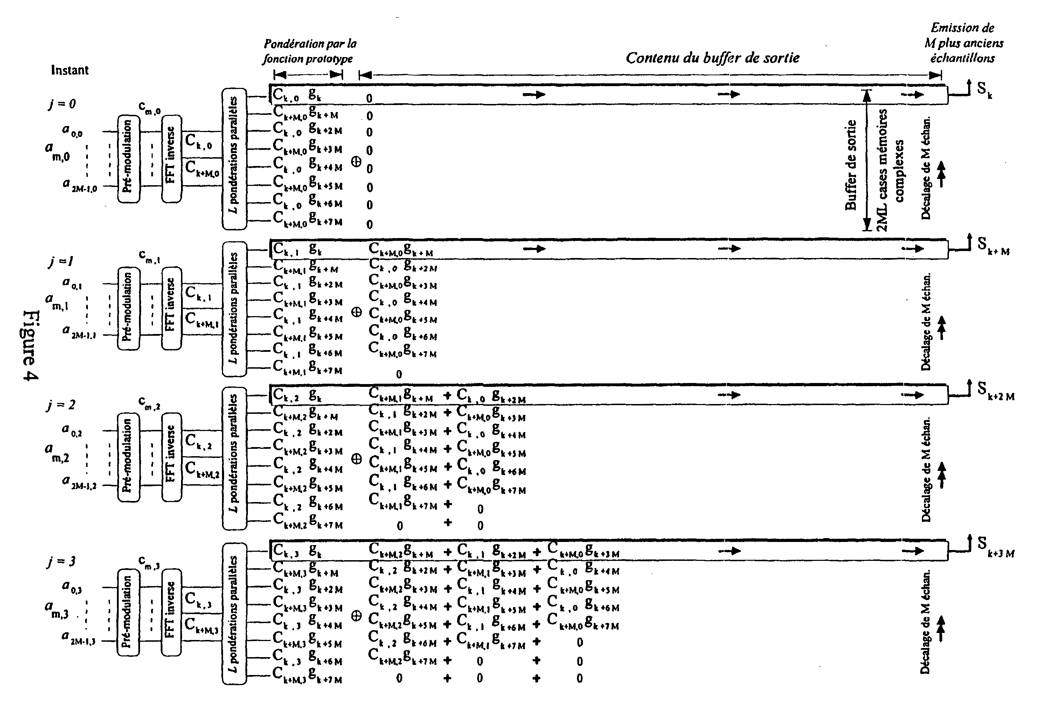

La figure 4 précise l'amorçage de cette procédure de modulation, dans le cas où *L* = 4.

L'architecture du modulateur correspondant à l'algorithme ci-dessus présenté devra donc comporter :

une ROM de taille *ML+1* réels, contenant les coefficients du filtre.
une RAM de taille 2*ML* complexes correspondant au buffer de sortie.
un circuit de FFT complexe (réalisant une FFT inverse) de taille 2*M*.

Pour augmenter la vitesse de traitement, on parallélisera les opérations de pondération en utilisant *L* RAMs de taille 2*M* associées à *L* multiplieurs, ou même 2*L* RAMs de taille *M* complexes associées à 2*L* multiplieurs, au lieu d'une RAM de 2*ML* complexes.

La complexité du circuit de modulation est donc :

- pour le filtrage :

Afin de réaliser le filtrage, nous multiplions les résultats de la FFT inverse complexe par les 2*ML* coefficients de la fonction prototype, en réalisant L opérations de pondération en parallèle, dont nous ajoutons les résultats au buffer de sortie. Etant donné que les coefficient de la fonction prototype sont réels, nous avons (2$\times$2*ML*) multiplications réelles et 2*ML* additions complexes ou 4*ML* additions réelles. La taille du buffer de sortie est alors 2*ML* mémoires complexes ou 4*ML* mémoires réelles.

- pour la transformation IFFT :

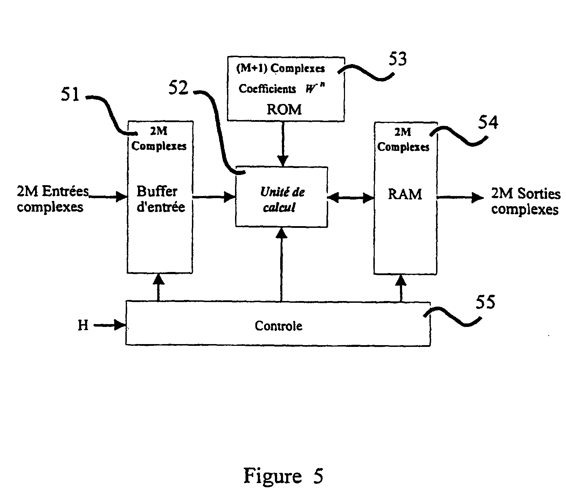

Les résultats indiqués dans le tableau ci-dessous concernent un circuit de IFFT complexe conventionnel, dont le schéma de principe est donné figure 5. Elle comprend un buffer d'entrée 51, recevant 2M entrées, une unité de calcul 52, alimentée par des coefficients mémorisés en mémoire ROM 53 et des valeurs calculées stockées dans une mémoire RAM 54, qui délivre 2M sorties. Un module de contrôle pilote ces divers éléments.

Ce tableau donne une estimation des opérations et matériels nécessaires pour la partie de modulation :

| Modulation | Additions (Réelle) | Multiplications (Réelle) | RAM (Réelle) | ROM (Réelle) | FIFO (Réelle) |
|---|---|---|---|---|---|
| Pré-modulation | x | x | x | x | x |
| FFT inverse | $6M(1+\log_2 M)$ | $4M (1+\log_2 M)$ | $8M$ | $2M$ | x |
| Filtrage | $4ML$ | $4ML$ | $4ML$ | $ML+1$ | x |

On notera qu'aucune multiplication ni addition n'est nécessaire pour la pré-modulation car la multiplication complexe simple à effectuer à cette étape se traduit, au niveau de l'architecture, par des permutations de parties réelles et imaginaires, ainsi que des changements de signe.

Selon une variante de l'invention, un gain supplémentaire de place mémoire peut être obtenu. Il est en effet possible de n'utiliser que ($2L$-1) RAMs de $M$ complexes (stockage total : $2ML$-$M$ complexes au lieu de $2ML$). Pour ce faire, à l'étape j, on lit les $M$ échantillons à émettre dans la RAM correspondante, et on écrit, au fur et à mesure, les $M$ complexes $C_{k+M,j}g_{k+(2L-1)M}$ aux mêmes adresses. Pour réaliser cette opération de filtrage, on pourra utiliser, au choix, des RAMs ou des FIFOs.

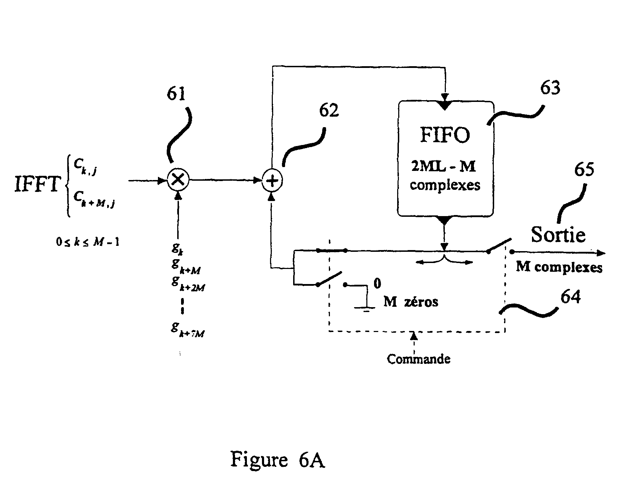

Les figures 6A à 6C illustrent ce procédé, dans le cas où une structure FIFO est choisie.

Dans le cas de la figure 6A, un seul multiplieur 61 est mis en oeuvre. Il assure la multiplication des données délivrées par la FFT inverse par les coefficients de pondération, et alimente un additionneur 62, qui reçoit également la sortie de la mémoire FIFO 63 contenant 2ML-M complexes. Cette FIFO 63 est alimentée par le résultat de l'addition 62. Un module de commande 64 permet de diriger la sortie de la FIFO vers l'extérieur, pour délivrer les M complexes prêts à émettre 65.

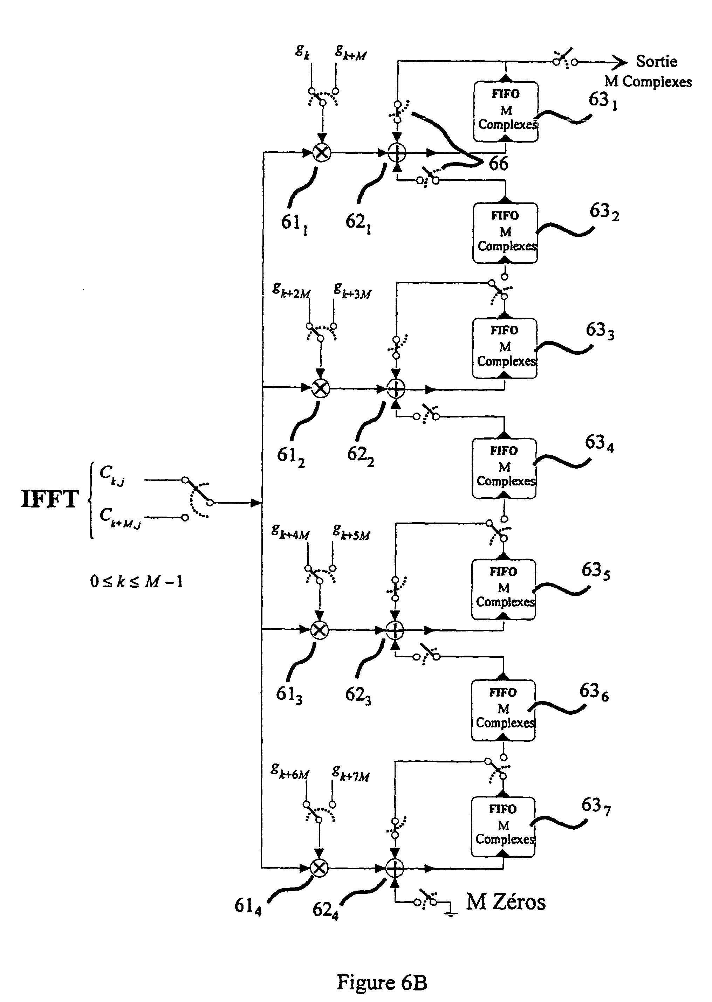

Il est possible d'utiliser N multiplieurs en parallèle, où N = 1,2,4,...2L. Ainsi, dans le cas de la figure 6B, on met en oeuvre L(=4) multiplieurs en parallèle $61_1$ à $61_4$. Ils sont alimentés alternativement par l'un ou l'autre des coefficients de pondération qui leur sont associés.

Ils alimentent chacun un additionneur $62_1$ à $62_4$ qui reçoit également des données des 2L mémoires FIFO $63_1$ à $63_7$ comprenant chacune M complexes. La FIFO $63_1$ délivre les M sorties complexes. Des moyens de sélection 66 permettent de sélectionner la FIFO à prendre en compte à chaque instant.

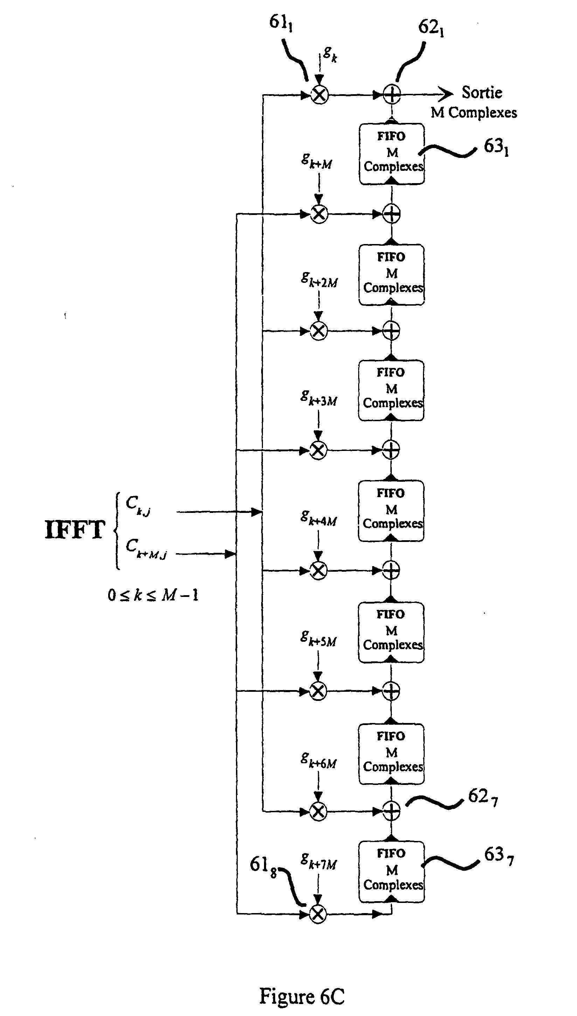

La figure 6C présente le cas de la mise en oeuvre de 2L (=8) multiplieurs. Dans ce cas, la structure ne nécessite plus la présence de moyens de commande. Les 2L mémoires FIFO $63_1$ à $63_7$ sont chacune alimentées par un multiplieur $61_1$ à $61_8$, associé à son propre coefficient de pondération, et associées à un additionneur $62_1$ à $62_8$.

Il est à noter que la réduction de la place mémoire nécessaire au buffer de sortie est intéressante uniquement si les deux conditions suivantes sont respectées :

- l'algorithme utilisé pour réaliser la FFT inverse range ses sorties dans l'ordre "optimal" $C_{0,j},C_{M,j},C_{1,j},C_{M+1,j},...,C_{M-1,j}$, $C_{2M-1}$ et fonctionne au rythme $\tau_0/(2M)$.
  En effet, dans le cas de sorties rangées dans l'orde "bit-reverse" ou même dans un ordre "naturel" $C_{0,j},C_{1,j},...$ $C_{2M-2,j},C_{2M-1,j}$, le gain de mémoire proposé, dû à une écriture et une lecture simultanée dans le buffer de sortie, nécessite alors de réordonner les sorties de la FFT inverse dans l'ordre "optimal", ce qui nécessite une mémorisation en sortie de FFT. L'un dans l'autre, le gain de mémoire sera alors négligeable, voire nul.
- les multiplieurs utilisés, pour éviter tout stockage des sorties de la FFT inverse, fonctionnent "rapidement" : le rythme de fonctionnement de N multiplieurs en parallèle doit être égal à $N\tau_0/(2LM)$, pour N = 1,2,4,...2L.

Selon une autre variante de l'invention, il est possible d'optimiser la FFT inverse. Etant donné le caractère complexe "particulier" des entrées $(a_{m,n}(-1)^{m(n+L)}i^{m+n})$ de la FFT inverse à l'émission, il est possible d'utiliser un algorithme de FFT à entrées réelles.

Il est connu que déphaser de $i^m$ les entrées $x_m$ d'une FFT de taille 2M, revient à appliquer une permutation circulaire à ses sorties $y_k$ de $M/2$ vers la gauche. En appliquant ce résultat, il apparaît clairement que l'étape de pré-modulation :

$$(a_{m,n} i^{m+n} (-1)^{m(n+L)})$$

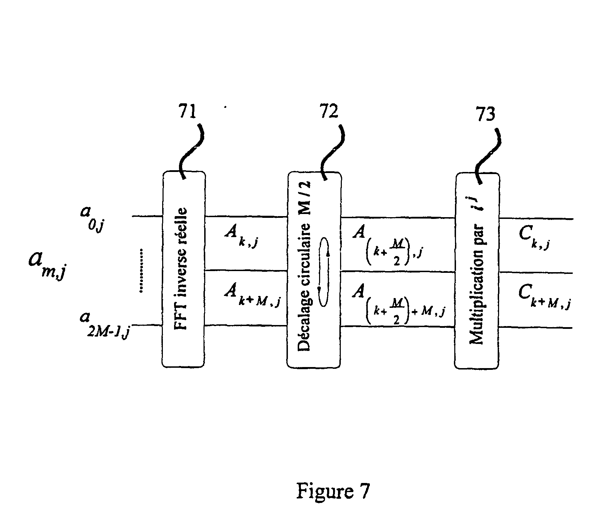

suivie de la FFT inverse complexe peut être réalisée, ainsi que cela est illustré en figure 7, selon les étapes suivantes :

- FFT inverse réelle 71 des données $(-1)^{m(n+L)} a_{m,n}$.
- Permutation circulaire 72 de M/2 des sorties.
- Multiplication 73 par $i^n$.

Un tel algorithme permet de réduire de moitié la place mémoire nécessaire à la FFT, ainsi que le nombre d'opérations. La figure 5 représente ces trois opérations.

On peut noter que l'opération de multiplication par $(-1)^{m(n+L)}$ a été omise. En effet, elle peut être évitée.

A l'émission, pour générer le signal en bande basse s(t) (équation 1) de façon numérique, il faut multiplier les $a_{m,n}$ par $(-1)^{m(n+L)}$. En réception, l'estimation des données nécessitent à nouveau cette multiplication, comme on le verra par la suite.

Etant donné que le retrait de ce terme multiplicatif n'agit en rien sur l'orthogonalité des translatées "temps-fréquence", il est possible de s'affranchir de cette multiplication. Cela revient alors à générer le signal bande basse, centré autour de la fréquence $M\nu_0 = f_e/2$, suivant :

$$s(t) = \sum_n \sum_{m=0}^{2M-1} a_{m,n} (-1)^{m(n+L)} e^{i\varphi_{m,n}} e^{2i\pi m \nu_0 t} g(t - n\tau_0).$$

## 6 - Démodulation

Le procédé de démodulation doit permettre de récupérer l'information utile émise grâce aux échantillons du signal reçu en réception. Nous supposons ici que le canal "délai-Doppler" (cas le plus général) de fonction de transfert T(f,t) est parfaitement estimé, et qu'il est localement assimilé à un canal multiplicatif complexe $T_{m,j} = \rho_{m,j} e^{i\theta_{m,j}}$.

Etant donné l'orthogonalité des translatées "temps-fréquence" de la fonction prototype, l'information émise à l'instant $j\tau_0$, sur la porteuse m est ainsi estimée :

$$\hat{a}_{m,j} = \Re e \left[ \frac{1}{\rho_{m,j}} e^{-i\theta_{m,j}} \int r(t) g_{m,j}^*(t) dt \right] \qquad (12)$$

En pratique, nous travaillons sur les versions échantillonnées à $\frac{\tau_0}{M} = \frac{1}{W}$ du signal reçu, la formule de démodulation devient donc :

$$\hat{a}_{m,j} \approx \Re e \left[ \frac{1}{\rho_{m,j}} e^{-i\theta_{m,j}} (-i)^{m+j} \frac{1}{W} \sum_{p \in \mathbb{Z}} r\left( p \frac{\tau_0}{M} \right) e^{-2i\pi m \frac{p}{2M}} g\left( (p - jM) \frac{\tau_0}{M} \right) \right] \qquad (13)$$

En reprenant les notations données par la formule (2) et en tenant compte du nombre limité de coefficients représentatifs de la fonction prototype ($2ML$), nous obtenons comme formule de démodulation:

$$\hat{a}_{m,j} = \Re e\left[\frac{1}{\rho_{m,j}}\underbrace{\frac{e^{-i\theta_{m,j}}(-i)^{m+j}(-1)^{m(j+L)}}{W}}_{\text{Correction de phase et d'amplitude}}\sum_{k=0}^{2M-1}\underbrace{\left[\overbrace{\sum_{q=0}^{L-1}r_{k+jM+2qM}g_{k+2qM}}^{\substack{\text{Pondération par la}\\\text{fonction prototype}}}\right]}_{\substack{\text{Repliement}\\\text{FFT complexe}}}e^{-2i\pi m\frac{k}{2M}}\right] \quad (14)$$

$$\text{avec}\quad\begin{cases}p = jM + 2qM + k\\0 \le k \le 2M-1\\0 \le q \le L-1\end{cases}$$

La formule (14) suggère cinq étapes pour l'algorithme rapide de démodulation :

- Pondération des échantillons reçus par la fonction prototype.
- Repliement temporel.
- FFT complexe de taille 2M.
- Correction de phase et d'amplitude.
- Extraction de la partie réelle.

La solution proposée selon l'invention pour minimiser la place mémoire occupée par le filtrage (pondération et repliement temporel) en réception est la suivante :

- Insérer les M échantillons reçus dans un buffer d'entrée de taille 2*ML* complexes.
- Multiplier les données de ce buffer par les coefficients représentatifs de la fonction prototype.
- Sommer les résultats de ces multiplications (Repliement temporel).
- Appliquer une Transformée de Fourier directe aux 2M valeurs complexes ainsi obtenues.
- Corriger le résultat de cette FFT en phase et en amplitude.
- Extraire la partie réelle.

Il est à noter que cette technique est indépendante de la façon dont le signal a été construit à l'émission. Elle peut s'appliquer à la réception de tout type de signaux multiporteuses OFDM/OQAM.

Afin d'illustrer le fonctionnement de cet algorithme, nous décomposons les signaux de taille 2M complexes en 2 sous-signaux de M complexes chacun, de la façon suivante :

$$r_{k+jM+2qM} = r_{k'+jM+2qM}\times 1_{\{k\in\{0,\dots,M-1\}\}} + r_{(k'+M)+jM+2qM}\times 1_{\{k\in\{M,\dots,2M-1\}\}}$$

$$\text{avec}\quad\begin{cases}0 \le k \le 2M-1\\0 \le k' \le M-1\end{cases}\quad\quad (15.1)$$

et

$$g_{k+jM+2qM} = g_{k'+jM+2qM}\times 1_{\{k\in\{0,\dots,M-1\}\}} + g_{(k'+M)+jM+2qM}\times 1_{\{k\in\{M,\dots,2M-1\}\}}$$

$$\text{avec}\quad\begin{cases}0 \le k \le 2M-1\\0 \le k' \le M-1\end{cases}\quad\quad (15.2)$$

L'entrée de la FFT sera quant à elle notée

$$R_{k,j} = \sum_{q=0}^{L-1} r_{k+jM+2qM} \cdot g_{k+2qM} ,$$

k variant de 0 à 2M-1.

L'estimation des données émises débutera après un retard de $(2L-1)\tau_0$. Il faut, en effet, que tous les échantillons reçus comprenant la donnée $a_{m,j}$ soient stockés dans le buffer d'entrée avant de calculer $\hat{a}_{m,j}$.

Les notations (15.1) et (15.2) ci-dessus permettent d'écrire, dans le cas $L=4$, les entrées de la FFT nécessaires à l'estimation de $a_{m,0}$ ces équations sous la forme (avec k' = 0...M-1) :

$$R_{k',0} = r_{k'} \cdot g_{k'} + r_{k'+2M} g_{k'+2M} + r_{k'+4M} g_{k'+4M} + r_{k'+6M} g_{k'+6M}$$

$$R_{k'+M,0} = r_{k'+M} g_{k'+M} + r_{k'+3M} g_{k'+3M} + r_{k'+5M} g_{k'+5M} + r_{k'+7M} g_{k'+7M}$$

De même, les entrées de la FFT correspondant à l'estimation des $a_{m,l}$ (m=0 à 2M-1) sont ainsi construits :

$$R_{k',1} = r_{k'+M} g_{k'} + r_{k'+3M} g_{k'+2M} + r_{k'+5M} g_{k'+4M} + r_{k'+7M} g_{k'+6M}$$

$$R_{k'+M,1} = r_{k'+2M} g_{k'+M} + r_{k'+4M} g_{k'+3M} + r_{k'+6M} g_{k'+5M} + r_{k'+8M} g_{k'+7M}$$

...

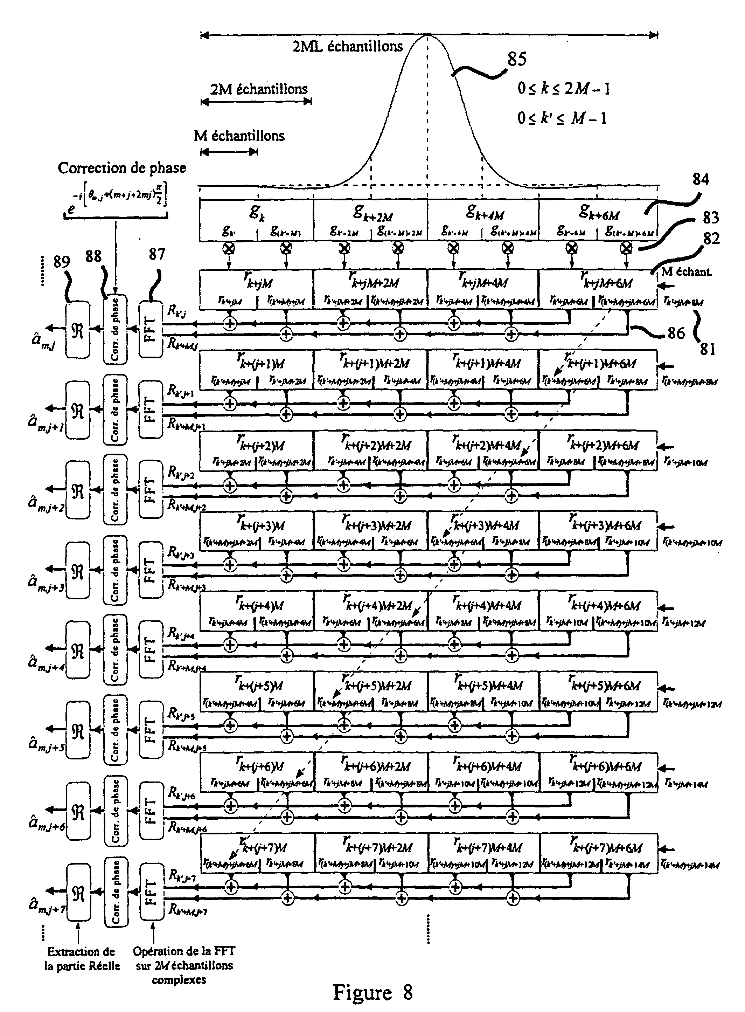

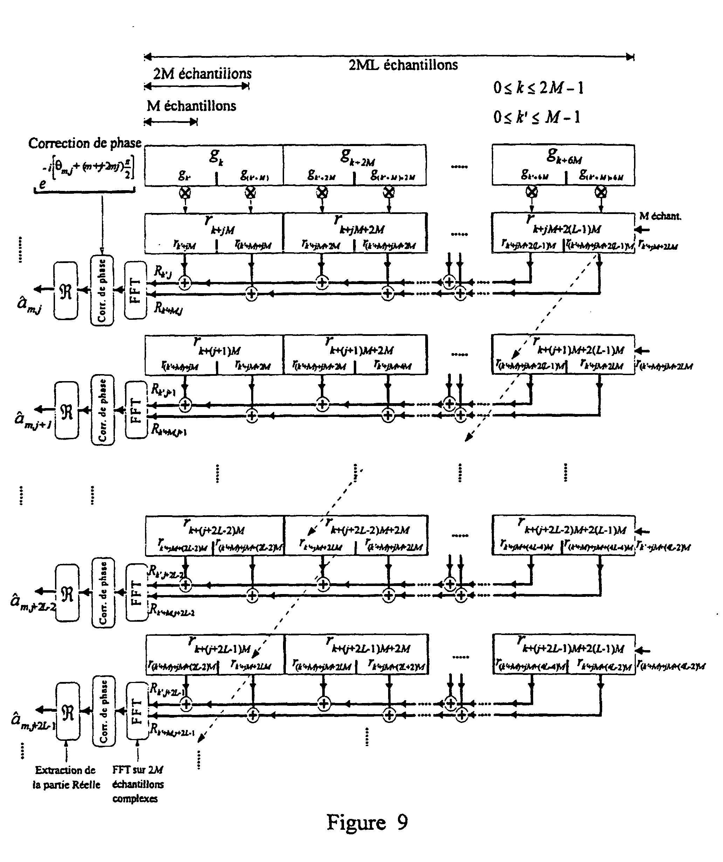

La figure 8 illustre le fonctionnement de l'architecture proposée, dans le cas L=4. Le cas général est illutré par la figure 9, et se déduit directement de la figure 8.

Sur cette dernière figure, les M échantillons 81 reçus à un instant, sont stockés dans un buffer d'entrée 82. A chaque temps symbole, les données contenues dans ce buffer 82 sont multipliées (83) par les coefficients de pondération 84, représentatifs de la forme d'onde 85 (IOTA dans l'exemple), puis additionnées (86) pour réaliser le repliement.

Les données $R_{kjj}$ correspondantes alimentent la FFT 87, effectuées sur 2M échantillons complexes. On effectue ensuite une correction de phase 88, puis une extraction 89 de la partie réelle.

Enfin, on réalise un décalage du contenu du buffer d'entrée 82. La figure 8 présente le contenu de ce buffer pour huit instants successifs, correspondant à la production des sorties $\hat{a}_{mj}$ à $\hat{a}_{mj+7}$.

Les formules précédentes représentent le cas du démodulateur associé à un modulateur OFDM/OQAM de densité 2. Cependant, cette dernière architecture resterait applicable au cas de la restitution de 2M complexes à partir de M complexes, découlant du cas général de modulation illustré par la formule (11). La formule générale associée serait :

$$\begin{cases} R_{k',j} = \sum_{q'=0}^{2L-1} r_{k',j+q'} \cdot \alpha'_{k',q'} \\ R_{k'+M,j} = \sum_{q'=0}^{2L-1} r_{k',j+q'} \cdot \beta_{k',q'} \end{cases} \quad \text{avec } k' \in \{0,...,M-1\} \qquad (16)$$

L'algorithme ci-dessus requiert les moyens suivants :

- une RAM de taille $2ML$ complexes (buffer d'entrée).
- une ROM de taille $(ML+1)$ réels (coefficients du filtre numérique).
- 1, L ou 2L multiplieurs complexes, selon le degré de parallélisation des opérations de pondération.
- un circuit FFT complexe de taille 2M.

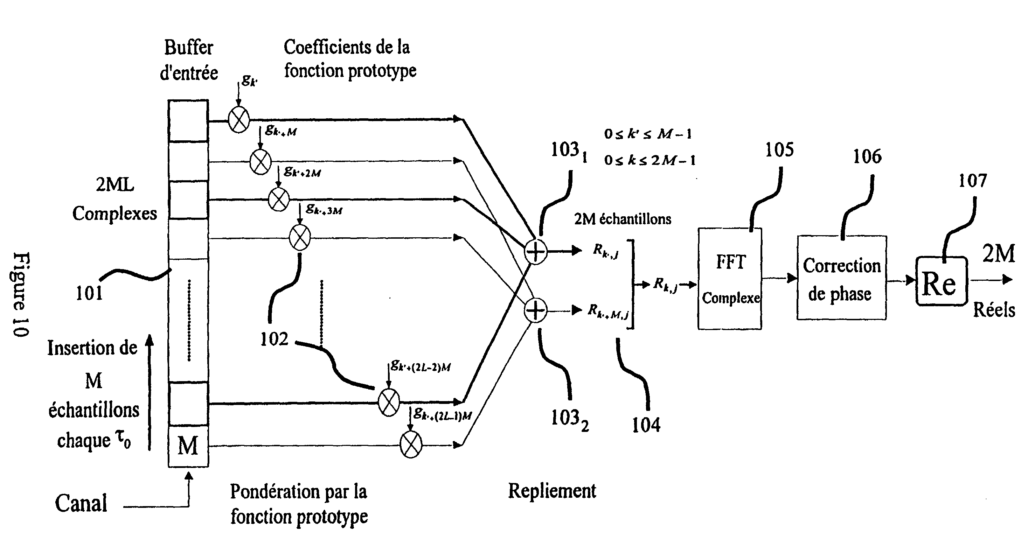

La figure 10 illustre l'architecture proposée.

Le buffer d'entrée, pouvant contenir 2ML complexes, reçoit M échantillons à chaque $\tau_0$. On effectue la pondération par la fonction prototype par les multiplications 102, puis le repliement, à l'aide de deux additionneurs $103_1$ et $103_2$, qui alimentent un buffer 104 de 2M valeurs alimentant la FFT complexe 105.

En sortie de la FFT 105, on effectue une correction de phase et d'amplitude 106, puis l'on sélectionne la partie réelle 107, pour fournir les 2M réels transmis.

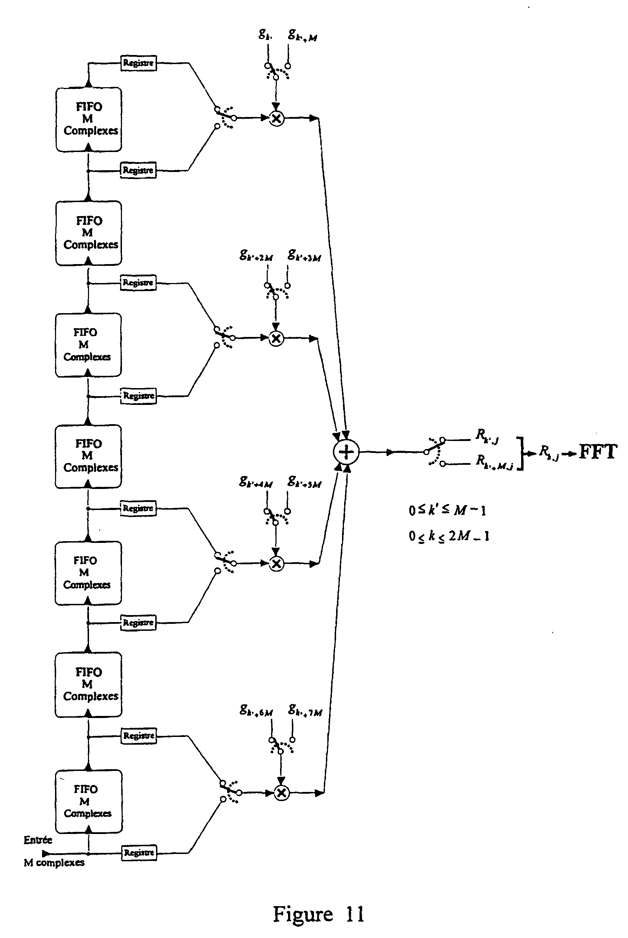

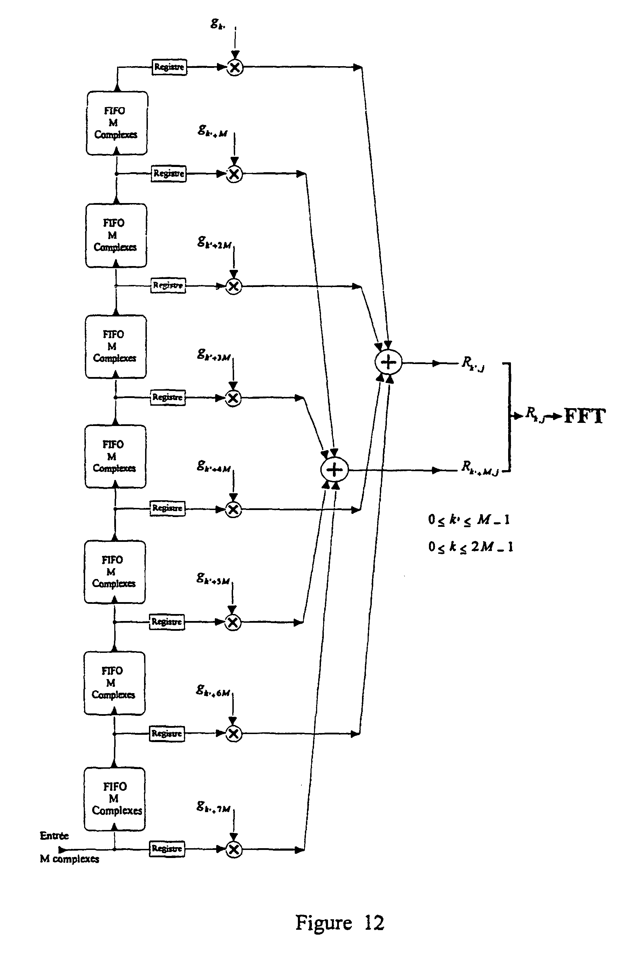

De même qu'à l'émission, il est possible de paralléliser les opérations de pondérations (multiplications complexes) en utilisant 2*L* buffers de taille *M* complexes associés à *L*, ou 2*L* multiplieurs, plutôt qu'un seul de taille 2*ML*. Ces aspects sont illustrés respectivement par les figures 11 et 12. Le fonctionnement se déduit directement de celui décrit en relation avec les figures 6B et 6C pour l'émission.

Il est possible de n'utiliser que (2*L*-1) RAMs de *M* complexes (stockage total : 2*ML*-*M* complexes au lieu de 2*ML*) pour stocker les échantillons reçus. Il faut pour cela, à l'étape j, lire le k$^{ème}$ (k=0..*M*-1) échantillon reçu à l'étape (j-(2L-1)), et écrire le k$^{ème}$ échantillon courant à la même adresse.

Pour réaliser cette opération, on pourra, au choix, utiliser des RAMs ou des FIFOs. Les figures 11 et 12 mettent en oeuvre ce procédé, dans le cas d'une structure FIFO.

A nouveau, ainsi qu'à l'émission, il est à noter que la réduction de la place mémoire nécessaire au buffer d'entrée est intéressante uniquement si les deux conditions suivantes sont respectées :

- l'algorithme utilisé pour réaliser la FFT fonctionne au rythme $\tau_0/(2M)$ avec des entrées se présentant dans l'ordre "optimal" $R_{0,j}, R_{M,j}, R_{1,j}, R_{M+1,j}, ..., R_{M-1,j}, R_{2M-1,j}$. Dans le cas contraire, une mémorisation à l'entrée de la FFT serait nécessaire, et le gain de mémoire sera a lors négligeable, voire nul.
- les multiplieurs utilisés, également pour éviter tout stockage des entrées de la FFT, fonctionnent "rapidement" : le rythme de fonctionnement de N multiplieurs en parrallèle doit être égal à $N\tau_0/(2LM)$, pour N = 1,2,4,...2L.

## Revendications

1. Procédé de modulation d'un signal multiporteuse de densité $1/(\nu_0 . \tau_0)=2$, formé de symboles successifs, comprenant chacun M échantillons à émettre, et constitués d'un jeu de 2M fréquences porteuses orthogonales au sens réel, l'écart entre deux fréquences porteuses voisines valant $\nu_0$ et l'écart entre les instants d'émission de deux symboles consécutifs, ou temps symbole, valant $\tau_0$, chacune desdites fréquences porteuses étant modulée selon une même fonction prototype de modulation g(t) présentant une longueur de troncature de $2L\tau_0$, **caractérisé en ce qu'**il comprend, à chaque temps symbole, les étapes suivantes :

   - obtention d'un jeu de 2M coefficients complexes représentatifs de données à émettre ;
   - calcul de 2LM combinaisons linéaires à partir desdits 2M coefficients complexes obtenus, les coefficients de pondération utilisés dans cesdites combinaisons étant représentatifs de ladite fonction prototype g(t), de façon à obtenir 2LM coefficients ;
   - sommation desdits 2LM coefficients pondérés dans des emplacements mémoire prédéterminés respectifs d'une mémoire comprenant 2LM emplacements mémoire représentant 2L groupes de M sommes partielles distinctes, de façon à former progressivement, dans lesdits emplacements mémoire, sur une durée de $2L\tau_0$, M échantillons à émettre ;
   - émission desdits échantillons à émettre.

2. Procédé de modulation selon la revendication 1, **caractérisé en ce qu'**un échantillon à émettre à l'instant $j\tau_0 + k\tau_0/M$, noté $s_{k+jM}$ s'écrit :

$$s_{k+jM} = \sum_{q=0}^{2L-1} \left[ \alpha_{k,q} C_{k,j-q} + \beta_{k,q} C_{k+M,j-q} \right]$$

où :

   $C_{0,j}$ à $C_{2M-1,j}$ sont les 2M coefficients complexes générés entre les instants $j\tau_0$ et $(j+1)\tau_0$ ;
   $\alpha_{k,q}$ et $\beta_{k,q}$ sont lesdits coefficients de pondération.

**3.** Procédé de modulation selon la revendication 2, **caractérisé en ce que** :

- $\alpha_{k,q} = 0$ pour q impair ;
- $\beta_{k,q} = 0$ pour q pair.

**4.** Procédé de modulation selon la revendication 3, **caractérisé en ce qu'**il comprend, pour la génération d'un symbole d'indice j formé de M échantillons, les étapes suivantes :

- obtention de 2M entrées réelles $a_{m,n}$ représentatives d'un signal source ;
- pré-modulation de chacune desdites entrées réelles, produisant 2M coefficients complexes ;
- transformation de Fourier inverse desdits 2M coefficients complexes, produisant 2M coefficients transformés complexes $C_{0,j}$ à $C_{2M-1,j}$ ;
- pour chacun des M couples $(C_{k,j}, C_{(k+M),j})$ dedits coefficients transformés, calcul de 2L couples pondérés, les coefficients de pondération étant représentatives de ladite fonction prototype;
- addition du résultat de chacune desdites 2LM valeurs pondérées au contenu de 2LM zones mémoire distinctes, de façon à construire progressivement les échantillons à émettre constituants les symboles j, (j+1), (j+2),... (j+2L-1);
- émission de M échantillons correspondant aux M plus anciens contenus desdites zones mémoire puis mise à zéro du contenu de cesdites M zones mémoire.

**5.** Procédé de modulation selon l'une quelconques des revendications 1 à 4, **caractérisé en ce que** lesdites étapes sont mises en oeuvre au rythme $\tau_0/M$ des échantillons.

**6.** Procédé de modulation selon l'une quelconque des revendications 1 à 5, **caractérisé en ce que** ladite étape d'émission est suivie d'une étape de mise à jour desdits emplacements mémoire, comprenant :

- un décalage physique du contenu de chacun desdits emplacements mémoire, si ces derniers sont des éléments d'un registre à décalage ; ou
- une mise à jour des adresses d'écriture et de lecture desdits emplacements mémoire, si ces derniers sont des éléments d'une mémoire RAM.

**7.** Procédé de modulation selon l'une quelconque des revendications 1 à 6, **caractérisé en ce que** lesdits coefficients représentatifs de données à émettre sont obtenus par la mise en oeuvre d'une transformation mathématique comprenant les étapes suivantes:

- application d'une transformation de Fourier inverse réelle ;
- permutation circulaire du résultat de cette transformée inverse de M/2 coefficients vers la gauche;
- multiplication par $i^n$ de chacun desdits coefficients

**8.** Procédé de modulation selon l'une quelconque des revendications 1 à 7, **caractérisé en ce que** le signal centré autour de la fréquence $M\nu_0$ s'écrit :

$$s(t) = \sum_{n} \sum_{m=0}^{2M-1} a_{m,n} (-1)^{m(n+L)} i^{m+n} e^{2i\pi m\nu_0 t} g(t - n\tau_0)$$

**9.** Dispositif de modulation d'un signal multiporteuse de densité $1/(\nu_0 \cdot \tau_0) = 2$, formé de symboles successifs, comprenant chacun M échantillons à émettre, et constitués d'un jeu de 2M fréquences porteuses orthogonales au sens réel, l'écart entre deux fréquences porteuses voisines valant $\nu_0$ et l'écart entre les instants d'émission de deux symboles consécutifs valant $\tau_0$,
chacune desdites fréquences porteuses étant modulée selon une même fonction prototype de modulation g(t) présentant une longueur de troncature de $2L\tau_0$,
**caractérisé en ce qu'**il comprend :

- des moyens de mémorisation temporaire de 2L groupes de M sommes partielles ;
- des moyens de pondération de 2M coefficients complexes représentatifs de données à émettre par des coefficients de pondération représentatifs de ladite fonction prototype g(t) ;

- des moyens de sommation des coefficients pondérés dans des emplacements mémoire prédéterminés respectifs desdits moyens de mémorisation temporaire,
de façon à former progressivement, sur une durée de $2L\tau_0$, lesdits échantillons à émettre.

**10.** Dispositif de modulation selon la revendication 9, **caractérisé en ce qu'**il comprend :

- des moyens de transformation mathématique délivrant lesdits coefficients représentatifs de données à émettre au rythme $\tau_0/2M$ et dans l'ordre suivant ($C_{0,j}$, $C_{M+1,j}$),...($C_{M-1,j}$, $C_{2M-1,j}$) ;
- 2LM-M emplacements mémoire de type RAM à écriture et lecture simultanées ;
- N multiplieurs complexes fonctionnant au rythme $N\tau_0/2LM$, N valant 1, 2, 4,...ou 2L.

**11.** Procédé de démodulation d'un signal reçu, correspondant à un signal émis multiporteuse de densité $1/(\nu_0.\tau_0) = 2$, formé de symboles successifs, représentés chacun par M échantillons à émettre, et constitués d'un jeu de 2M fréquences porteuses orthogonales au sens réel,
l'écart entre deux fréquences porteuses voisines valant $\nu_0$ et l'écart entre les instants d'émission de deux symboles consécutifs, ou temps symbole, valant $\tau_0$, chacune desdites fréquences porteuses étant modulée selon une même fonction prototype de modulation g(t) présentant une longueur de troncature de $2L\tau_0$,
**caractérisé en ce que** l'on reconstruit une estimation des 2M données réelles émises à un temps symbole donné, à l'aide des étapes suivantes:

- échantillonnage dudit signal reçu à la fréquence d'échantillonnage $\tau_0/M$, délivrant M échantillons complexes reçus ;
- mémorisation de chacun desdits M échantillons complexes reçus dans un emplacement prédéterminé d'une mémoire d'entrée comprenant 2ML emplacements complexes, dans laquelle ont été préalablement mémorisés (2L-1)M échantillons reçus pendant les 2L-1 temps symbole précédents ;
- multiplication des 2ML valeurs contenues dans ladite mémoire d'entrée par des coefficients représentatifs de ladite fonction prototype ;
- repliement temporel, par sommation de 2M séries de L résultats de multiplication, de façon à obtenir 2M valeurs complexes ;
- traitement desdites 2M valeurs complexes pour former lesdites estimations des 2M données réelles émises.

**12.** Procédé de démodulation selon la revendication 11, **caractérisé en ce que** les 2M valeurs complexes issues de l'étape de repliement temporel entre les instants $(j+2L-1)\tau_0$ et $(j+2L)\tau_0$ s'écrivent:

$$R_{k',j} = \sum_{q'=0}^{2L-1} \alpha'_{k,q'} \, r_{k'+(j+q')M} \quad ,$$

$$R_{k'+M,j} = \sum_{q'=0}^{2L-1} \beta'_{k,q'} \, r_{k'+(j+q')M} \quad .$$

où :

$r_{k'+(j+q')M}$ représente l'échantillon reçu à l'instant $k'\tau_0+(j+q')\tau_0/M$;
$\alpha'_{k,q'}$ et $\beta'_{k,q'}$ sont lesdits coefficients de pondération.

**13.** Procédé de démodulation selon l'une quelconque des revendications 11 et 12, **caractérisé en ce que** :

- $\alpha'_{k,q'} = 0$ pour q' impair ;
- $\beta'_{k,q'} = 0$ pour q' pair.

**14.** Procédé selon l'une quelconque des revendications 11 à 13, **caractérisé en ce que** ladite étape de traitement comprend les étapes suivantes :

- application d'une transformation mathématique inverse de celle effectuée lors de la modulation sur lesdites 2M valeurs complexes, délivrant 2M valeurs transformées ;
- correction de distorsions de phase et/ou d'amplitude dues au canal de transmission ;
- extraction de la partie réelle desdites valeurs complexes transformées.

**15.** Procédé de démodulation selon l'une quelconque des revendications 11 à 14, **caractérisé en ce que** lesdites étapes sont mise en oeuvre au rythme $\tau_0/M$ des échantillons.

**16.** Dispositif de démodulation d'un signal reçu, correspondant à un signal émis multiporteuse de densité $1/(\nu_0.\tau_0) = 2$, formé de symboles successifs, représentés chacun par M échantillons à émettre, et constitués d'un jeu de 2M fréquences porteuses orthogonales au sens réel,
l'écart entre deux fréquences porteuses voisines valant $\nu_0$ et l'écart entre les instants d'émission de deux symboles consécutifs, ou temps symbole, valant $\tau_0$, chacune desdites fréquences porteuses étant modulée selon une même fonction prototype de modulation présentant une longueur de troncature de $2L\tau_0$,
**caractérisé en ce qu'**il comprend :

- des moyens d'échantillonnage dudit signal reçu ;
- des moyens de mémorisation temporaire des échantillons complexes échantillonnés, comprenant 2ML emplacements complexes ;
- des moyens de multiplication desdits échantillons mémorisés par des coefficients de pondération représentatifs de ladite fonction prototype ;
- des moyens de repliement temporel, assurant la sommation de L résultats de pondération, de façon à obtenir 2M valeurs complexes ;
- des moyens de traitement desdites valeurs complexes, délivrant une estimation de 2M données réelles émises à chaque temps symbole.

**17.** Dispositif de démodulation selon la revendication 16, **caractérisé en ce que** lesdits moyens de traitement comprennent :

- des moyens de transformation mathématique inverse de celle effectuée lors de la modulation sur lesdites 2M valeurs complexes ;
- des moyens de correction de distorsions de phase et/ou d'amplitude dues au canal de transmission ;
- des moyens d'extraction de la partie réelle des valeurs transformées.

**18.** Dispositif de démodulation selon l'une quelconque des revendications 16 et 17, **caractérisé en ce qu'**il comprend :

- des moyens de mémorisation comprenant 2ML-M emplacements mémoire complexes de type RAM à écriture et lecture simultanée ;
- N multiplieurs complexes fonctionnant au rythme $N\tau_0/2LM$, où N vaut 1, 2, 4 ... ou 2L ;
- des moyens de transformation mathématique fonctionnant au rythme $\tau_0/2M$, dont les entrées, à l'étape j, $R_{0,j}$ à $R_{2M-1,j}$ sont lues dans l'ordre $(R_{0,j}, R_{M,j})$, $(R_{1,j}, R_{M+1,j})$,... $(R_{M-1,1}, R_{2M-1,j})$.

**Patentansprüche**

**1.** Modulationsverfahren eines Mehrfachträgersignals mit der Dichte $1/(\nu_0 \cdot \tau_0) = 2$, das aus aufeinander folgenden Symbolen gebildet wird, die jeweils M zu sendende Abtastwerte umfassen und aus einem Satz von 2M im reellen Sinn orthogonalen Trägerfrequenzen gebildet werden,
wobei der Abstand zwischen zwei benachbarten Trägerfrequenzen $\nu_0$ beträgt und der Abstand zwischen den Sendezeitpunkten zweier aufeinander folgender Symbole oder Symbolzeiten den Wert $\tau_0$ aufweist,
wobei jede dieser Trägerfrequenzen nach einer selben Prototyp-Modulationsfunktion g(t) moduliert wird, die eine Abbruchlänge $2L\tau_0$ aufweist,
**dadurch gekennzeichnet, dass** es bei jeder Symbolzeit die folgenden Schritte umfasst:

- Erzielen eines Satzes von 2M komplexen Koeffizienten, die für zu sendende Daten repräsentativ sind;
- Berechnung von 2LM Linearkombinationen, ausgehend von den erzielten 2M komplexen Koeffizienten, um die 2LM Koeffizienten zu erhalten, wobei die in diesen Kombinationen angewandten Wichtungskoeffizienten für die Prototypfunktion g(t) repräsentativ sind;

- Summierung dieser 2LM gewichteten Koeffizienten in entsprechend vorgegebenen Speicherplätzen eines Speichers, der 2LM Speicherplätze umfasst, die 2L Gruppen von M verschiedene Teilsummen darstellen, um in fortschreitender Weise M zu sendende Abtastwerte in diesen Speicherplätzen über eine Zeitdauer von $2L\tau_0$ zu bilden;
- Senden der zu sendenden Abtastwerte.

2. Modulationsverfahren nach Anspruch 1, **dadurch gekennzeichnet, dass** ein als $s_{k+jM}$ ausgedrückter, zum Zeitpunkt $j\tau_0 + k\tau_0/M$ zu sendender Abtastwert folgendermaßen geschrieben wird:

$$s_{k+jM} = \sum_{q=0}^{2L-1} \left[ \alpha_{k,q} C_{k,j-q} + \beta_{k,q} C_{k+M,j-q} \right]$$

wobei:

$C_{0,j}$ bis $C_{2M-1,j}$ die zwischen den Zeitpunkten $j\tau_0$ und $(j+1)\tau_0$ erzeugten komplexen 2M Koeffizienten sind; $\alpha_{k,q}$ und $\beta_{k,q}$ die Wichtungskoeffizienten sind.

3. Modulationsverfahren nach Anspruch 2, **dadurch gekennzeichnet, dass**:

- $\alpha_{k,q} = 0$, wenn q ungerade ist;
- $\beta_{k,q} = 0$, wenn q gerade ist.

4. Modulationsverfahren nach Anspruch 3, **dadurch gekennzeichnet, dass** es zum Erzeugen eines aus M Abtastwerten gebildeten Symbols mit dem Index j die folgenden Schritte aufweist:

- Erzielen von 2M, für ein Quellensignal repräsentative reelle Eingaben $a_{m,n}$;
- Vormodulieren einer jeden dieser reellen Eingaben, wobei 2M komplexe Koeffizienten erzeugt werden;
- inverse Fourier-Transformation dieser 2M komplexen Koeffizienten, wobei 2M komplexe transformierte Koeffizienten $C_{0,j}$ bis $C_{2M-1,j}$ gebildet werden;
- für jedes der M Paare $(C_{k,j}, C_{(k+M),j})$ dieser transformierten Koeffizienten, Berechnung von 2L gewichteten Paaren, wobei die Wichtungskoeffizienten repräsentativ für die Prototypfunktion sind;
- Summierung des Ergebnisses eines jeden dieser 2LM gewichteten Werte zum Inhalt von 2LM verschiedenen Speicherbereichen, um fortschreitend die zu sendenden Abtastwerte aufzubauen, welche die Symbole j, (j+1), (j+2), ... (j+2L-1) bilden;
- Senden von M Abtastwerten, die den M ältesten Inhalten dieser Speicherbereiche entsprechen, dann Rücksetzung auf Null des Inhaltes dieser M Speicherbereiche.

5. Modulationsverfahren nach einem der Ansprüche 1 bis 4, **dadurch gekennzeichnet, dass** diese Schritte im Takt $\tau_0/M$ der Abtastwerte angewandt werden.

6. Modulationsverfahren nach einem der Ansprüche 1 bis 5, **dadurch gekennzeichnet, dass** der Sendeschritt von einem Aktualisierungsschritt der Speicherplätze gefolgt wird, der folgendes umfasst:

- eine physische Verschiebung des Inhaltes eines jeden dieser Speicherplätze, wenn diese die Elemente eines Registers mit Verschiebung sind oder
- eine Aktualisierung der Eintragungs- und Leseadressen dieser Speicherplätze, wenn es sich dabei um Elemente eines RAM-Speichers handelt.

7. Modulationsverfahren nach einem der Ansprüche 1 bis 6, **dadurch gekennzeichnet, dass** diese für die zu sendenden Daten repräsentativen Koeffizienten durch Anwendung einer mathematischen Transformation erhalten werden, welche die folgenden Schritte umfasst:

- Anwendung einer reellen inversen Fourier-Transformation;
- zyklische Vertauschung des Ergebnisses dieser inversen Transformation von M/2 Koeffizienten nach links;

- Multiplikation eines jeden dieser Koeffizienten durch $i^n$.

8. Modulationsverfahren nach einem der Ansprüche 1 bis 7, **dadurch gekennzeichnet, dass** das um die Frequenz $M\nu_0$ zentrierte Signal folgendermaßen ausgedrückt wird:

$$s(t) = \sum_n \sum_{m=0}^{2M-1} a_{m,n}(-1)^{m(n+L)} \, i^{m+n} \, e^{2i\pi m\nu_0 t} \, g(t - n\tau_0)$$

9. Modulationsvorrichtung für ein Mehrfachträgersignal der Dichte $1/(\nu_0 \cdot \tau_0) = 2$, das aus aufeinander folgenden Symbolen gebildet wird, die jeweils M zu sendende Abtastwerte umfassen und aus einem Satz von 2M im reellen Sinn orthogonalen Trägerfrequenzen gebildet werden,
   wobei der Abstand zwischen zwei benachbarten Trägerfrequenzen $\nu_0$ beträgt und der Abstand zwischen den Sendezeitpunkten zweier aufeinander folgender Symbole oder Symbolzeiten den Wert $\tau_0$ aufweist,
   wobei jede dieser Trägerfrequenzen nach einer selben Prototyp-Modulationsfunktion g(t) moduliert wird, die eine Abbruchlänge $2L\tau_0$ aufweist,
   **dadurch gekennzeichnet, dass** sie folgendes aufweist:

   - Mittel zum vorübergehenden Speichern von 2L Gruppen von M Teilsummen;
   - Mittel zum Wichten von 2M komplexen Koeffizienten, die für zu sendende Daten repräsentativ sind, mittels für die Prototypfunktion g(t) repräsentativen Wichtungskoeffizienten;
   - Mittel zum Summieren der gewichteten Koeffizienten in den vorgegebenen Speicherplätzen, die den vorübergehenden Speichermitteln entsprechen, um in fortschreitender Weise über ein Zeitdauer $2L\tau_0$ die zu sendenden Abtastwerte zu bilden.

10. Modulationsvorrichtung nach Anspruch 9, **dadurch gekennzeichnet, dass** sie folgendes umfasst:

    - mathematische Transformationsmittel, welche die erwähnten, für zu sendende Daten repräsentative Koeffizienten im Takt $\tau_0/2M$ in der folgenden Reihenfolge liefern: $(C_{0,j}, C_{M+1,j}, ... (C_{M-1,j}, C_{2M-1,j})$;
    - 2LM-M Speicherplätze vom Typ RAM, die gleichzeitig beschrieben und gelesen werden können;
    - N komplexe Multiplizierer, die im Takt $N\tau_0/2LM$ funktionieren, wobei der Wert von N 1, 2, 4, .... oder 2L beträgt.

11. Demodulationsverfahren eines empfangenen Signals, das einem gesendeten Mehrfachträgersignal der Dichte $1/(\nu_0 \cdot \tau_0) = 2$ entspricht, das aus aufeinander folgenden Symbolen gebildet wird, die jeweils von M zu sendenden Abtastwerten dargestellt und von einem Satz von 2M im reellen Sinn orthogonalen Trägerfrequenzen gebildet werden,
    wobei der Abstand zwischen zwei benachbarten Trägerfrequenzen $\nu_0$ beträgt und der Abstand zwischen den Sendezeitpunkten zweier aufeinander folgender Symbole oder Symbolzeiten den Wert $\tau_0$ aufweist,
    wobei jede dieser Trägerfrequenzen nach einer selben Prototyp-Modulationsfunktion g(t) moduliert wird, die eine Abbruchlänge $2L\tau_0$ aufweist,
    **dadurch gekennzeichnet, dass** man eine Schätzung der zu einer gegebenen Symbolzeit gesendeten 2M reellen Daten wiederherstellt, mit Hilfe der folgenden Schritte:

    - Abtasten des empfangenen Signals mit der Abtastfrequenz $\tau_0/M$, was M empfangene komplexe Abtastwerte liefert;
    - Speichern eines jeden dieser empfangenen komplexen Abtastwerte M an einer vorgegebenen Stelle eines Eingangsspeichers, der 2ML komplexe Speicherplätze umfasst, wobei (2L-1)M während der vorhergehenden 2L-1 Symbolzeiten empfangene Abtastwerte in diesem Eingangsspeicher gespeichert wurden;
    - Multiplikation der in diesem Eingangsspeicher gespeicherten 2ML Werte mit für die Prototypfunktion repräsentativen Koeffizienten;
    - vorübergehendes Aliasing durch Summierung der 2M Serien von L Multiplikationsergebnissen, um 2M komplexe Werte zu erhalten;
    - Verarbeitung dieser 2M komplexen Werte, um die Schätzungen der 2M reellen gesendeten Daten zu bilden.

12. Demodulationsverfahren nach Anspruch 11, **dadurch gekennzeichnet, dass** die aus dem vorübergehenden Aliasing-Schritt zwischen den Zeitpunkten $(j + 2L-1)\tau_0$ und $(j + 2L)\tau_0$ kommenden 2M komplexen Werte folgendermaßen geschrieben werden:

$$R_{k',j} = \sum_{q'=0}^{2L-1} \alpha'_{k,q}\, r_{k'+(j+q')M}$$

$$R_{k'+M,j} = \sum_{q'=0}^{2L-1} \beta'_{k,q}\, r_{k'+(j+q')M}$$

wobei:

$r_{k'+(j+q')M}$ den zum Zeitpunkt $k'\tau_0+(j + q')\tau_0/M$ empfangene Abtastwert darstellt;
$\alpha'_{k,q'}$ und $\beta'_{k,q'}$ die Wichtungskoeffizienten sind.

**13.** Demodulationsverfahren nach einem der Ansprüche 11 oder 12, **dadurch gekennzeichnet dass**:

- $\alpha'_{k,q'} = 0$, wenn q' ungerade ist;
- $\beta'_{k,q'} = 0$, wenn q' gerade ist.

**14.** Verfahren nach einem der Ansprüche 11 bis 13, **dadurch gekennzeichnet, dass** der Verarbeitungsschritt die folgenden Schritte umfasst:

- Anwendung einer mathematischen Transformation, die invers zu der beim Modulieren über die 2M komplexen Werte ausgeführten ist, die 2M transformierte Werte liefert;
- Korrektur von aus dem Sendekanal sich ergebenden Phasen- und/oder Amplitudenverzerrungen;
- Extraktion des reellen Teils der transformierten komplexen Werte.

**15.** Demodulationsverfahren nach einem der Ansprüche 11 bis 14, **dadurch gekennzeichnet, dass** die Schritte im Takt $\tau_0/M$ der Abtastwerte angewandt werden.

**16.** Demodulationsvorrichtung eines empfangenen Signals, das einem gesendeten Mehrfachträgersignal der Dichte $1/(\nu_0\cdot\tau_0) = 2$ entspricht, das aus aufeinander folgenden Symbolen gebildet wird, die jeweils von M zu sendenden Abtastwerte dargestellt und von einem Satz von 2M im reellen Sinn orthogonalen Trägerfrequenzen gebildet werden,
wobei der Abstand zwischen zwei benachbarten Trägerfrequenzen $\nu_0$ beträgt und der Abstand zwischen den Sendezeitpunkten zweier aufeinander folgender Symbole oder Symbolzeiten den Wert $\tau_0$ aufweist,
wobei jede dieser Trägerfrequenzen nach einer selben Prototyp-Modulationsfunktion moduliert wird, die eine Abbruchlänge $2L\tau_0$ aufweist,
**dadurch gekennzeichnet, dass** es folgendes umfasst:

- Mittel zum Abtasten des empfangenen Signals;
- Mittel zum vorübergehenden Speichern der abgetasteten komplexen Abtastwerte, welche 2ML komplexe Speicherstellen umfassen;
- Mittel zum Multiplizieren dieser gespeicherten Abtastwerte mit für die Prototypfunktion repräsentativen Wichtungskoeffizienten;
- vorübergehende Aliasing-Mittel, welche das Summieren von L Wichtungsergebnissen sicherstellen, um 2M komplexe Werte zu erhalten;
- Verarbeitungsmittel dieser komplexen Werte, die eine Abschätzung von bei jeder Symbolzeit gesendeten 2M reellen Daten liefern.

**17.** Demodulationsverfahren nach Anspruch 16, **dadurch gekennzeichnet, dass** die Verarbeitungsmittel folgendes umfassen:

- mathematische Transformationsmittel, die invers zu den beim Modulieren über die 2M komplexen Werte ausgeführten sind;
- Korrekturmittel für aus dem Sendekanal sich ergebende Phasenund/oder Amplitudenverzerrungen;
- Extraktionsmittel des reellen Teils der transformierten Werte.

**18.** Demodulationsverfahren nach einem der Ansprüche 16 oder 17, **dadurch gekennzeichnet, dass** es folgendes umfasst:

- Speichermittel, die 2ML-M komplexe Speicherplätze des Typs RAM, mit gleichzeitigem Schreiben und Lesen umfassen;
- N komplexe Multiplizierer, die im Takt $N\tau_0/2LM$ arbeiten, wobei der Wert von N 1, 2, 4, .... oder 2L beträgt;
- mathematische Transformationsmittel, die im Takt $\tau_0/2M$ arbeiten, deren Eingaben beim Schritt j, $R_{0,j}$ bis $R_{2M-1,j}$, in der Reihenfolge $(R_{0,j}, R_{M,j})$, $(R_{1,j}, R_{M+1,j})$, ... $(R_{M-1,j}, R_{2M-1,j})$ gelesen werden.

## Claims

**1.** Process for the modulation of a multicarrier signal with a density $1/(v_0.\tau_0)=2$, formed by successive symbols, each comprising M samples to be transmitted and constituted by a set of 2M orthogonal carrier frequencies in the real sense, the interval between two neighbouring carrier frequencies being equal to $v_0$ and the interval between the times of transmission of two consecutive symbols, or the symbol time, being equal to $\tau_0$, each of said carrier frequencies being modulated according to one and the same modulation prototype function (g)t with a truncation length of $2L\tau_0$,
**characterised in that** it comprises, at each symbol time, the following steps:

- the obtaining of a set of 2M complex coefficients representing data to be transmitted;
- the computing of 2LM linear combinations from said 2M complex coefficients obtained, the weighting coefficients used in these combinations representing said prototype function g(t), so as to obtain 2LM coefficients;
- the summing of said 2LM coefficients weighted in the respective predetermined memory locations of a memory comprising 2LM memory locations representing 2L groups of M distinct partial sums,
  so as to gradually form, in said memory locations, over a duration of $2L\tau_0$, M samples to be transmitted;
- the transmission of said samples to be transmitted.

**2.** Modulation process according to Claim 1, **characterised in that** a sample to be transmitted at the instant $j\tau_0 + k\tau_0/M$, denoted $S_{k+jM}$, is written:

$$s_{k+jM} = \sum_{q=0}^{2L-1} \left[ \alpha_{k,q} C_{k,j-q} + \beta_{k,q} C_{k+M,j-q} \right]$$

where:

$C_{o,j}$ to $C_{2M-1,j}$ are the 2M complex coefficients generated between the instants $j\tau_0$ and $(j+1)\tau_0$;
$\alpha_{k,q}$ and $\beta_{k,q}$ are said weighting coefficients.

**3.** Modulation process according to Claim 2, **characterised in that**

- $\alpha_{k,q} = 0$ for q as an odd parity number;
- $\beta_{k,q} = 0$ for q as an even parity number.

**4.** Modulation process according to Claim 3, **characterised in that** it comprises, for the generation of a symbol with an index j formed by M samples, the following steps:

- the obtaining of 2M real inputs $a_{m,n}$ representing a source signal;
- the pre-modulation of each of said real inputs producing 2M complex coefficients;

- the reverse Fourier transform of said 2M complex coefficients producing 2M complex transformed coefficients $C_{0,j}$ to $C_{2M-1,j}$;
- for each of the M pairs ($C_{k,j}$, $C_{(k+M),j}$) of said transformed coefficients, the computation of 2L weighted coefficients, the weighting coefficients representing said prototype function;
- the addition of the result of each of said weighted 2LM values to the contents of 2LM distinct memory zones, so as to gradually build the samples to be transmitted constituting the symbols j, (j+1), (j+2) ,... (j+2L-1) ;
- the sending of M samples corresponding to the M oldest contents of said memory zones and then the resetting to zero of the contents of said M memory zones.

5. Modulation process according to any one of Claims 1 to 4, **characterised in that** said steps are implemented at the rate $\tau_0/M$ of the samples.

6. Modulation process according to any one Claims 1 to 5, **characterised in that** said transmission step is followed by a step for the updating of said memory locations comprising:

   - a physical shifting of the contents of each of said memory locations if the latter are elements of a shift register; or
   - an updating of the write and read addresses of said memory locations, if the latter are elements of a RAM.

7. Modulation process according to any one of Claims 1 to 6, **characterised in that** said coefficients representing data elements to be transmitted are obtained by the implementation of a mathematical transform comprising the following steps:

   - the application of a real reverse Fourier transform;
   - the circular permutation of the result of this reverse transform by M/2 coefficients leftwards;
   - the multiplication of each of said coefficients by $i^n$.

8. Modulation process according to any one of Claims 1 to 7, **characterised in that** the signal centred on the frequency $Mv_0$ is written:

$$s(t) = \sum_{n} \sum_{m=0}^{2M-1} a_{m,n} (-1)^{m(n+L)} \, i^{m+n} \, e^{2i\pi m v_0 t} \, g(t - n\tau_0)$$

9. Device for the modulation of a multicarrier signal with a density $1/(v_0 . \tau_0)=2$, formed by successive symbols, each comprising M samples to be transmitted and constituted by a set of 2M orthogonal carrier frequencies in the real sense, the interval between two neighbouring carrier frequencies being equal to $v_0$ and the interval between the times of transmission of two consecutive symbols being equal to $\tau_0$, each of said carrier frequencies being modulated according to one and the same modulation prototype function (g)t with a truncation length of $2L\tau_0$,
   **characterised in that** it comprises:

   - means for the temporary storage of 2M groups of M partial sums;
   - means for the weighting of 2M complex coefficients representing data elements to be transmitted by weighting coefficients representing said prototype function g(t);
   - means for the summing of the weighted coefficients in respective predetermined memory locations of said temporary storage means,
   so as to gradually form said samples to be transmitted over a duration of $2L\tau_0$.

10. Modulation device according to Claim 9, **characterised in that** it comprises:

    - means of mathematical transformation delivering said coefficients representing data elements to be transmitted at the rate of $\tau_0/2M$ and in the following order $(C_{0,j}, C_{M+1,j}),...(C_{M-1,j}, C_{2M-1,j})$ ;
    - 2LM-M simultaneous write/read RAM-type memory locations;
    - N complex multipliers working at the rate $N\tau_0/2LM$, N being equal to 1, 2, 4,...or 2L.

**11.** Process for the demodulation of a received signal corresponding to a transmitted multicarrier signal with a density $1/(v_0.\tau_0)=2$, formed by successive symbols, each comprising M samples to be transmitted and constituted by a set of 2M orthogonal carrier frequencies in the real sense, the interval between two neighbouring carrier frequencies being equal to $v_0$ and the interval between the times of transmission of two consecutive symbols, or the symbol time, being equal to $\tau_0$,

each of said carrier frequencies being modulated according to one and the same modulation prototype function (g)t with a truncation length of $2L\tau_0$,

**characterised in that** an estimation of 2M real data elements transmitted at a given symbol time is reconstituted by means of the following steps:

- the sampling of said signal received at the sampling frequency $\tau_0/M$, delivering M complex samples received;
- the storage of each of said M complex samples received in a predetermined location of an input memory comprising 2ML complex locations, in which there have been previously memorised (2L-1)M samples received during the 2L-1 previous symbol times;
- the multiplication of the 2ML values contained in said input memory by coefficients representing said prototype function;
- temporal aliasing, by the summing of 2M series of L results of multiplication, so as to obtain 2M complex values;
- the processing of said 2M complex values to form said estimations of the 2M real data elements transmitted.

**12.** Demodulation process according to Claim 11, **characterised in that** the 2M complex values derived from the temporal aliasing step between the instants $(j+2L-1)\tau_0$ and $(j+2L)\tau_0$ are written:

$$R_{k',j} = \sum_{q'=0}^{2L-1} \alpha'_{k,q}\, r_{k'+(j+q')M}$$

$$R_{k'+M,j} = \sum_{q'=0}^{2L-1} \beta'_{k,q}\, r_{k'+(j+q')M}$$

where:

$r_{k'+(j+q')M}$ represents the sample received at the instant $k'\tau_0+(j+q')\tau_0/M$;
$\alpha'_{k,q}$ and $\beta'_{k,q}$ are said weighting coefficients.

**13.** Demodulation process according to any one of Claims 11 and 12, **characterised in that**:

- $\alpha'_{k,q'} = 0$ for q' as an odd parity number;
- $\beta'_{k,q'} = 0$ for q' as an even parity number.

**14.** Process according to any one of Claims 11 to 13, **characterised in that** said processing step comprises the following steps:

- the application of a mathematical transformation that is the reverse of the one performed during the modulation on said 2M complex values, delivering 2M transformed values;
- the correction of phase and/or amplitude distortions due to the transmission channel;
- the extraction of the real part of said transformed complex values.

**15.** Demodulation process according to any one of Claims 11 to 14, **characterised in that** said steps are implemented at the rate $\tau_0/M$ of the samples.

**16.** Device for the demodulation of a received signal corresponding to a transmitted multicarrier signal with a density $1/(v_0.\tau_0)=2$, formed by successive symbols, each represented by M samples to be transmitted and constituted by a set of 2M orthogonal carrier frequencies in the real sense,

the interval between two neighbouring carrier frequencies being equal to $v_0$ and the interval between the times of transmission of two consecutive symbols, or the symbol time, being equal to $\tau_0$, each of said carrier frequencies being modulated according to one and the same modulation prototype function with a truncation length of $2L\tau_0$, **characterised in that** it comprises:

- means for the sampling of said received signal;
- means for the temporary storage of the complex sample functions, comprising 2ML complex locations;
- means for the multiplication of said memorised samples by weighting coefficients representing said prototype function;
- temporal aliasing means, summing L weighting results, so as to obtain 2M complex values;
- means for the processing of said complex values, delivering an estimation of 2M real data elements transmitted at each symbol time.

17. Demodulation device according to Claim 16, **characterised in that** said processing means comprises:

- means of mathematical transformation that is the reverse of the transformation performed during the modulation on said 2M complex values;
- means for the correction of phase and/or amplitude distortions due to the transmission channel;
- means for the extraction of the real part of said transformed values.

18. Demodulation device according to any one of Claims 16 and 17, **characterised in that** it comprises:

- storage means comprising 2ML-M simultaneous write/read RAM-type complex memory locations;
- N complex multipliers working at the $N\tau_0/2LM$ rate, where N is equal to 1, 2, 4... or 2L;
- means of mathematical transformation working at the $\tau_0/2M$ rate, whose inputs, at step j, $R_{0,j}$ to $R_{2M-1,j}$ are read in the order $(R_{0,j}, R_{M,j})$, $(R_{1,j}, R_{M+1,j})$ ,... $(R_{M-1,j}, R_{2M-1,j})$.

```
        ┌─────────────────────────────┐
        │                             │
        │        Pré-modulation       │  ⌇  1
        │                             │
        └─────────────────────────────┘

        ┌─────────────────────────────┐
        │                             │
        │         FFT inverse         │  ⌇  2
        │                             │
        └─────────────────────────────┘

        ┌─────────────────────────────┐
        │         Pondération         │
        │   par la fonction prototype │  ⌇  3
        │                             │
        └─────────────────────────────┘

        ┌─────────────────────────────┐
        │                             │
        │    Addition dans le buffer  │  ⌇  4
        │                             │
        └─────────────────────────────┘

        ┌─────────────────────────────┐
        │                             │
        │  Décalage du buffer et Emission │  ⌇  5
        │                             │
        └─────────────────────────────┘
```

Figure 1

Figure 2

Figure 3

Figure 4

51

52

(M+1) Complexes

Coefficients $W^{-n}$

ROM

53

2M
Complexes

Buffer
d'entrée

54

2M
Complexes

*Unité de
calcul*

RAM

2M Entrées
complexes

2M Sorties
complexes

H

Controle

55

Figure 5

IFFT $\begin{cases} C_{k,j} \\ C_{k+M,j} \end{cases}$

$0 \le k \le M-1$

$g_k$
$g_{k+M}$
$g_{k+2M}$
$\vdots$
$g_{k+?M}$

61

62

63

FIFO

2ML - M
complexes

65

Sortie

M complexes

**0**

M zéros

64

Commande

Figure 6A

Figure 6B

Figure 6C

Figure 7

Figure 8

Figure 9

Figure 10

Buffer d'entrée

Coefficients de la fonction prototype

$g_{k'}$

$g_{k'+M}$

$g_{k'+2M}$

$g_{k'+3M}$

2ML Complexes

$g_{k'+(2L-2)M}$

$g_{k'+(2L-1)M}$

101

102

Insertion de M échantillons chaque $\tau_0$

Canal

Pondération par la fonction prototype

Repliement

$103_1$

$0 \leq k' \leq M-1$

$0 \leq k \leq 2M-1$

2M échantillons

$R_{k,j}$

$R_{k+M,j}$

$103_2$

104

$R_{k,j}$

105

FFT Complexe

106

Correction de phase

107

Re

2M

Réels

EP 1 005 748 B1

Figure 11

Figure 12

$0 \leq k' \leq M - 1$

$0 \leq k \leq 2M - 1$